(19) Europäisches Patentamt
European Patent Office
Office européen des brevets

(11) EP 3 077 470 B1

(12) # EUROPÄISCHE PATENTSCHRIFT

(45) Veröffentlichungstag und Bekanntmachung des Hinweises auf die Patenterteilung:
**03.01.2018 Patentblatt 2018/01**

(21) Anmeldenummer: **14799792.8**

(22) Anmeldetag: **19.11.2014**

(51) Int Cl.:
***B32B 27/06*** *(2006.01)* ***C09J 7/02*** *(0000.00)*
***C09J 151/06*** *(2006.01)* ***C09J 133/06*** *(2006.01)*
***C08F 220/18*** *(2006.01)* ***B32B 37/12*** *(2006.01)*
***C08F 279/02*** *(2006.01)* ***C08J 9/32*** *(2006.01)*
***C08J 9/36*** *(2006.01)* ***C09J 151/00*** *(2006.01)*

(86) Internationale Anmeldenummer:
**PCT/EP2014/075005**

(87) Internationale Veröffentlichungsnummer:
**WO 2015/082219 (11.06.2015 Gazette 2015/23)**

(54) **MEHRSCHICHTIGES PRODUKT**

MULTI-LAYER PRODUCT

PRODUIT MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2013 DE 102013224774**

(43) Veröffentlichungstag der Anmeldung:
**12.10.2016 Patentblatt 2016/41**

(73) Patentinhaber: **tesa SE**
**22848 Norderstedt (DE)**

(72) Erfinder:
- **PAPENBROOCK, Marten**
**20253 Hamburg (DE)**
- **PRENZEL, Dr. Alexander**
**22529 Hamburg (DE)**

(56) Entgegenhaltungen:
**EP-A1- 2 226 369 EP-A1- 2 316 900**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 077 470 B1

## Beschreibung

## Technisches Gebiet der Erfindung

Die vorliegende Erfindung betrifft ein mehrschichtiges Produkt, umfassend wenigstens eine Schicht eines Acrylat-basierten Schaumträgers (S); und eine auf diese Schicht aufgetragene mehrphasige Polymerzusammensetzung (P). Die mehrphasige Polymerzusammensetzung umfasst ein Kammcopolymer (A), das eine kontinuierliche Acrylatphase und eine diskontinuierliche Kohlenwasserstoffphase ausbildet, sowie wenigstens eine in der Kohlenwasserstoffphase des Kammcopolymers (A) lösliche Kohlenwasserstoffkomponente (B). Die vorliegende Erfindung betrifft ferner Klebebänder, umfassend das erfindungsgemäße mehrschichtige Produkt, sowie die Verwendung des mehrschichtigen Produktes zur Verklebung von Gegenständen, insbesondere zur Verklebung von Gegenständen mit unpolaren Oberflächen. Ebenfalls beschrieben wird ein Verfahren zur Herstellung des mehrschichtigen Produktes.

## Allgemeiner Stand der Technik

Haftklebrige Produkte auf Basis von Acrylaten sind aus dem Stand der Technik bekannt. Acrylat-basierte Klebmassen sind aufgrund ihrer Chemikalienbeständigkeit besonders für die Verklebung in industriellen Anwendungen geeignet. Nachteil der bekannten Zusammensetzungen ist jedoch, dass ihre Anwendung auf Substraten mit Oberflächen niedriger Energie (sogenannte "low surface energy" Materialien, im Folgenden auch "LSE"-Materialien) schwierig ist. Dies äußerst sich einerseits in der Klebkraft der bekannten Haftklebmassen auf unpolaren Substraten wie Polypropylen oder mit LSE-Lack beschichtetem Stahl, sowie, andererseits, in der Geschwindigkeit, mit der die maximalen Klebkräfte erzielt werden. Als Hauptursache für die niedrigen Klebkräfte bekannter Acrylat-basierter Haftklebmassen auf unpolaren Oberflächen wird der Unterschied der Oberflächenenergien der bekannten Polymerzusammensetzungen und der LSE-Materialien, sowie das Fehlen geeigneter Anknüpfungspunkte innerhalb der LSE-Oberflächen für kovalente oder stark nicht-kovalente Bindungen betrachtet. Die Adhäsion zwischen bekannten, Acrylat-basierten Polymerzusammensetzungen und LSE-Oberflächen beruht insofern im Wesentlichen auf schwächeren van-der-Waals-Kräften.

Ein Ansatz zum Ausbilden höherer Klebkräfte zwischen LSE-Oberflächen und Polymerzusammensetzungen auf Basis von Polyacrylaten besteht in der Verwendung von Klebharzen. Ein anderer Ansatz verwendet sogenannte Primer, d.h. Haftvermittler, um die Oberflächenenergie der LSE-Substrate anzuheben. Während der Einsatz von Primern grundsätzlich aufwändig ist, führt die Verwendung von Klebharzen zu einer Abnahme der Kohäsion der Polymerzusammensetzung, was zu einem Bruch der Verbindung unter Last führen kann. Ein solcher Kohäsionsverlust ist besonders dann kritisch, wenn die entsprechende Polymerzusammensetzung zur Verklebung von Gegenständen eingesetzt wird, die besonderen Kräften, wie z.B. Erschütterungen, ausgesetzt sind. Entsprechende Erschütterungen werden bei Bauteilen im Automobilbereich, insbesondere im Bereich der Karosserie oder im Motorraum beobachtet.

Aufgrund zahlreicher Neuentwicklungen im Bereich der Farben und Lacke, auf denen Klebebänder temporär oder permanent haften müssen, ergibt sich gerade im Automobilbereich der Wunsch nach Klebebändern, die gute Klebkräfte auch auf unpolaren Oberflächen aufweisen, ohne dass Kompromisse hinsichtlich der Kohäsion gemacht werden müssten. Solche Haftklebmassen sollten außerdem eine gute Chemikalienbeständigkeit aufweisen und hohe Klebkräfte bereits nach kurzer Zeit ausbilden. Mit solchen Haftklebmassen ausgestattete Klebebänder sollten ferner ein geringes Gewicht aufweisen, um den steigenden Anforderungen an einen geringen Kraftstoffverbrauch in der Automobilbranche Rechnung zu tragen. Zur Reduzierung des Volumengewichts von Klebebändern wurden in der Vergangenheit Acrylat-basierte Schaumträger vorgeschlagen.

Ein Beispiel eines Klebebandes umfassend eine Schicht eines solchen Acrylat-basierten Schaumträgers wird in der EP 2 226 369 A1 beschrieben. Das hierin beschriebene Klebeband enthält jedoch eine Haftklebmasse auf Basis eines chemisch vernetzten Kautschuks, weshalb die Beständigkeit gegenüber Chemikalien wie z.B. Benzin nicht ausreichend sichergestellt ist.

Während der Einsatz Acrylat-basierter Klebmassen die Chemikalienbeständigkeit im Vergleich zu Kautschuk basierten Klebmassen steigern würde, ist beim bloßen Austausch der Kautschuk- gegen eine Acrylat-basierte Haftklebmasse mit den beschriebenen Problemen auf LSE-Materialien zu rechnen. Der Einsatz von Klebharzen zur Verbesserung der Klebkräfte der Acrylat-basierten Haftklebmassen ist jedoch gerade im Automobilsektor wegen der beschriebenen Erschütterungen nicht angezeigt. Darüber hinaus wäre mit der Zeit damit zu rechnen, dass das verwendete Klebharz aus der Haftklebmasse in die Acrylat-basierte Schaumträgerschicht wandert, wodurch es zu einem zusätzlichen Verlust der Klebkräfte über die Zeit käme. Der aus dem Stand der Technik bekannte, alternative Ansatz, d.h. die Verwendung von Primern, scheidet auf Oberflächenbereichen von Automobilen aus praktischen Gründen ebenfalls aus.

Vor diesem Hintergrund besteht ein grundsätzlicher Bedarf an mehrschichtigen Produkten, die gute Klebkräfte auf unpolaren Oberflächen aufweisen, ohne dass Kompromisse hinsichtlich der Kohäsion gemacht werden müssten. Mehrschichtige Produkte sollten ferner eine gute Chemikalienbeständigkeit aufweisen, hohe Klebkräfte bereits nach kurzer Zeit ausbilden, ein geringes Gewicht besitzen und die hohen Klebkräfte über lange Zeiträume bewahren.

## Aufgabe der vorliegenden Erfindung

Der vorliegenden Erfindung liegt insofern die Aufgabe zugrunde, ein verbessertes mehrschichtiges Produkt bereit zu stellen.

## Zusammenfassung der vorliegenden Erfindung

Die vorliegende Erfindung adressiert diese Aufgabe und die Probleme des Standes der Technik, indem ein mehrschichtiges Produkt bereitgestellt wird, umfassend

- wenigstens eine Schicht eines Acrylat-basierten Schaumträgers (S); und
- eine auf diese Schicht aufgetragene, mehrphasige Polymerzusammensetzung (P);

wobei die mehrphasige Polymerzusammensetzung (P) umfasst:

◦ ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
◦ und wenigstens eine in der Kohlenwasserstoffphase des Kammcopolymers (A) lösliche Kohlenwasserstoffkomponente (B) umfassend wenigstens ein Weichharz und wenigstens ein Festharz;

wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin, bevorzugt um 40 bis 60 Kelvin, noch bevorzugter um 45 bis 60 Kelvin höher als Tg(Ac) ist.

Die statische Glasübergangstemperatur der diskontinuierlichen Kohlenwasserstoffphase innerhalb der Polymerzusammensetzung (P), Tg(Kw1), liegt bevorzugt in einem Bereich von -5 bis +15 °C, bevorzugter 0 bis +10 °C. Die statische Glasübergangstemperatur der kontinuierlichen Acrylatphase innerhalb der Polymerzusammensetzung (P), Tg(Ac), liegt bevorzugt unterhalb von -10 °C, bevorzugter in einem Bereich von -60 bis -20 °C, besonders bevorzugt in einem Bereich von -50 bis -30 °C.

Die vorliegende Erfindung betrifft ferner Verfahren zur Herstellung eines mehrschichtigen Produktes, umfassend die Schritte

(i) Bereitstellen einer Schicht eines Acrylat-basierten Schaumträgers (S) mit einer Oberseite und einer Unterseite; und
(ii) Aufbringen einer mehrphasigen Polymerzusammensetzung (P) auf die Oberseite und/oder die Unterseite des Schaumträgers (S),

wobei die mehrphasige Polymerzusammensetzung (P) umfasst:

◦ ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
◦ und wenigstens eine in der Kohlenwasserstoffphase des Kammcopolymers (A) lösliche Kohlenwasserstoffkomponente (B) umfassend wenigstens ein Weichharz und wenigstens ein Festharz,

und wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin, bevorzugt um 40 bis 60 Kelvin, noch bevorzugter um 45 bis 60 Kelvin höher als Tg(Ac) ist.

Das hierin beschriebene Kammcopolymer (A) der mehrphasigen Polymerzusammensetzung (P) bildet eine kontinuierliche Acrylatphase und eine diskontinuierliche Kohlenwasserstoffphase aus, sobald eine Vielzahl von Polymerketten einzelner Kammcopolymer-Moleküle miteinander in Kontakt kommen, beispielsweise nach Entfernen eines Lösungsmittels. Hierbei assoziieren sich die Acrylat-Hauptketten und die Kohlenwasserstoff-Seitenketten derart, dass eine kontinuierliche Acrylatphase und eine diskontinuierliche Kohlenwasserstoffphase entstehen.

Die mehrphasige Polymerzusammensetzung (P) weist wenigstens zwei Phasen, nämlich wenigstens eine Kohlenwasserstoff-Phase und eine Acrylatphase auf. Dass diese Phasen vorliegen, ergibt sich aus der Bestimmung der statischen Glasübergangstemperaturen der Polymerzusammensetzung mittels DSC. Alternativ hierzu oder ergänzend kann das Vorliegen der unterschiedlichen Phasen mittels Dynamisch Mechanischer Analyse (DMA) gemäß ASTM D4065-12 nachgewiesen werden. Hierbei werden in einer sogenannten temperature sweep-Messung zwei oder mehrere Glasübergänge gemessen, die sich aus den einzelnen Bestandteilen der Zusammensetzung ergeben.

Die kontinuierliche Acrylatphase der Polymerzusammensetzung (P) weist eine statische Glasübergangstemperatur Tg(Ac), gemessen nach der DSC Methode (Messmethode A-4), auf. Die diskontinuierliche Kohlenwasserstoffphase Kw1 weist eine statische Glasübergangstemperatur Tg(Kw1), gemessen nach der DSC Methode (Messmethode A-4), auf. Die statischen Glasübergangstemperaturen der Polymerzusammensetzung Tg(Kw) und Tg(Ac) unterscheiden sich um 35 bis 60 Kelvin, bevorzugt um 40 bis 60 Kelvin, noch bevorzugter um 45 bis 60 Kelvin, wobei Tg(Kw1) größer ist als Tg(Ac).

Aufgrund der besonderen Kombination des Kammcopolymers (A) und der Kohlenwasserstoffkomponente (B), die in der Kohlenwasserstoffphase Kw des Kammcopolymers (A) löslich ist, ist die Zusammensetzung trotz der unterschiedlichen Phasen stabil, das heißt es kommt zu keiner makroskopischen Phasentrennung in das Kammcopolymer (A) einerseits und die Kohlenwasserstoffkomponente (B) andererseits.

Die mehrphasige Polymerzusammensetzung (P) hat sich als besonders geeignet bei der Verklebung von Gegenständen mit LSE-Oberflächen erwiesen. Sie ist ferner chemikalien- und UV-beständig und zeigt sowohl bei Raumtemperatur (25°C) als auch bei hohen Temperaturen eine hohe Kohäsion, was sich in hohen Scherfestigkeiten äußert. Überraschender Weise gewährleistet die Polymerzusammensetzung (P) trotzdem ein schnelles Auffließen auf Oberflächen von Gegenständen niedriger Energie und mit LSE-Lacken beschichteten Oberflächen sowie auf anderen LSE-Materialien, was die Ausbildung hoher Klebkräfte nach kurzer Zeit ermöglicht. Die mehrphasige Polymerzusammensetzung (P) erlaubt ferner die Bereitstellung transparenter Haftklebmasse-Schichten.

In einem weiteren Aspekt betrifft die vorliegende Erfindung insofern ein Klebeband, umfassend das hierin beschriebene mehrschichtige Produkt. Es wird also auch die Bereitstellung eines mehrschichtigen Produktes, das ein Klebeband ist, beschrieben. Bevorzugt handelt es sich bei der Polymerzusammensetzung (P) um eine Haftklebmasse, bevorzugt um eine transparente Haftklebmasse. Ferner wird die Verwendung des mehrschichtigen Produktes zur Verklebung von Gegenständen, insbesondere zur Verklebung von Gegenständen mit niedrigen Oberflächenenergien (LSE-Materialien) beschrieben. Unter solchen LSE-Materialien werden im Sinne der vorliegenden Erfindung auch Materialien verstanden, die eigentlich keine LSE-Materialien darstellen, deren Oberflächen sich jedoch gegenüber Klebmassen aufgrund einer Beschichtung, z.B. mit einer Schicht eines LSE-Lackes, wie LSE-Materialien verhalten.

**Detaillierte Beschreibung der Erfindung**

Erfindungsgemäß wird die oben beschriebene Aufgabe gelöst durch ein mehrschichtiges Produkt, umfassend

- wenigstens eine Schicht eines Acrylat-basierten Schaumträgers (S); und
- eine auf diese Schicht aufgetragene mehrphasige Polymerzusammensetzung (P);

wobei die mehrphasige Polymerzusammensetzung (P) umfasst:

◦ ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
◦ und wenigstens eine in der Kohlenwasserstoffphase Kw des Kammcopolymers (A) lösliche Kohlenwasserstoffkomponente (B) umfassend wenigstens ein Weichharz und wenigstens ein Festharz;

wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin, bevorzugt um 40 bis 60 Kelvin, noch bevorzugter um 45 bis 60 Kelvin höher als Tg(Ac) ist.

In einer bevorzugten Ausführungsform ist die hierin beschriebene Polymerzusammensetzung dadurch gekennzeichnet, dass die statische Glasübergangstemperatur der diskontinuierlichen Kohlenwasserstoffphase innerhalb der Polymerzusammensetzung, Tg(Kw1), in einem Bereich von -5 bis +15 °C, bevorzugt 0 bis +10 °C liegt. Ebenfalls bevorzugt liegt die statische Glasübergangstemperatur der kontinuierlichen Acrylatphase innerhalb der Polymerzusammensetzung, Tg(Ac), unterhalb von -10 °C, bevorzugt in einem Bereich von -60 bis -20 °C, bevorzugter in einem Bereich

von -50 bis -30 °C.

Geeignete Polymerzusammensetzungen sind erhältlich, indem zunächst ein Kammcopolymer (A) bereitgestellt wird, dessen Polymerrückgrat (im Folgenden auch als "Rückgrat", "Polymerhauptkette" oder "Hauptkette" bezeichnet) zu wenigstens 20 Gewichtsprozent, bezogen auf das Gesamtgewicht des Polymerrückgrates, bevorzugt zu wenigstens 50 Gewichtsprozent, besonders bevorzugt zu 80 bis 100 Gewichtsprozent aus Acrylat-Monomereinheiten besteht. Erfindungsgemäß werden hierfür das wenigstens eine, bevorzugt wenigstens zwei, stärker bevorzugt wenigstens drei (Meth-)-Acrylatmonomer(e) in Gegenwart des wenigstens einen Makromers, ausgewählt aus der Gruppe bestehend aus polymerisierbaren Ethylen-Butylen-, Ethylen-Propylen-, Ethylen-Butylen-Propylen- und Isobutylen-Makromeren, polymerisiert.

Das wenigstens eine (Meth-)Acrylatmonomer, das zur Herstellung des Kammcopolymers (A) verwendet wird, kann ein Monomerengemisch von zwei oder mehr, besonders bevorzugt von drei oder vier (Meth-)Acrylatmonomeren sein und umfasst bevorzugt wenigstens ein Monomer ausgewählt aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, bevorzugt wenigstens ein Monomer der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat und Decylacrylat.

In einer bevorzugten Ausführungsform der Erfindung findet die Polymerisation des wenigstens einen (Meth-)Acrylatmonomers oder des Monomerengemisches von zwei oder mehr (Meth-)Acrylatmonomeren (im folgenden "Monomerengemisch"), das bzw. die zur Herstellung des Kammcopolymers verwendet wird bzw. werden, in Gegenwart wenigstens eines weiteren copolymerisierbaren Monomers statt. Dieses weitere, copolymerisierbare Monomer ist bevorzugt ausgewählt aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrrolidon und N-Vinylcaprolactam.

Ebenfalls bevorzugt wird die Polymerisation des wenigstens einen (Meth-)Acrylatmonomers oder des Monomerengemisches, das zur Herstellung des Kammcopolymers verwendet wird, in Anwesenheit eines weiteren, zweiten Makromers durchgeführt. Dieses zusätzliche, zweite Makromer ist ein nicht-polyolefinisches Makromer, bevorzugt ausgewählt aus Polymethacrylaten, Polystyrolen, Polydimethylsiloxanen, Polyethylenoxiden und Polypropylenoxiden.

Die Polymerzusammensetzung (P) umfasst neben dem Kammcopolymer (A) wenigstens eine in der Kohlenwasserstoffphase des Kammcopolymers lösliche Kohlenwasserstoffkomponente (B), die wenigstens ein Festharz und wenigstens ein Weichharz umfasst. "Kohlenwasserstoffkomponente" bedeutet, dass die Bestandteile dieser Komponente Kohlenwasserstoffe sind. Sowohl das Festharz als auch das Weichharz sind bevorzugt Kohlenwasserstoffharze mit einem zahlenmittleren Molekulargewicht Mn von 1.000 g/mol oder weniger, gemessen nach der GPC Methode. In einer besonders bevorzugten Ausführungsform besteht die Kohlenwasserstoffkomponente (B) aus einem Festharz (B-1) und einem Weichharz (B-2).

In einer weiteren Ausführungsform der Erfindung enthält die Polymerzusammensetzung (P) zusätzlich eine Kohlenwasserstoffverbindung (C), deren zahlenmittleres Molekulargewicht (Mn), gemessen nach der GPC Methode, mehr als 1.000 g/mol beträgt. In einer weiteren Ausführungsform enthält die Polymerzusammensetzung wenigstens ein Additiv, ausgewählt aus der Gruppe bestehend aus Weichmachern, Ölen und in der Acrylatphase des Kammcopolymers (A) löslichen Harzen, bevorzugt Kolophoniumestern und/oder Terpenphenolharzen.

Die mehrphasige Polymerzusammensetzung (P) kann gemäß einem Aspekt der vorliegenden Erfindung hergestellt werden durch ein Verfahren, umfassend die Schritte

- Polymerisieren wenigstens eines, bevorzugt wenigstens zweier, insbesondere wenigstens dreier, beispielsweise dreier oder vierer (Meth-)Acrylatmonomer(e) in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer Acrylat-Hauptkette und Kohlenwasserstoff-Seitenketten;
- Mischen des so erhaltenen Kammcopolymers (A) mit wenigstens einer Kohlenwasserstoffkomponente (B) umfassend wenigstens ein Weichharz und wenigstens ein Festharz, die mit den Kohlenwasserstoff-Seitenketten des Kammcopolymers (A) kompatibel ist;
- sowie, optional, das Vernetzen reaktiver, funktioneller Gruppen.

Nachfolgend werden die Komponenten der Polymerzusammensetzung (P) näher beschrieben.

*Kammcopolymer (A)*

Als Kammcopolymere (engl. comb-type graftcopolymer) werden Polymere bezeichnet, für deren Aufbau charakteristisch ist, dass sie an ihrer Hauptkette (Polymerrückgrat) Seitenketten tragen, die aufgrund ihrer Länge bereits

für sich als Polymer angesehen werden könnten.

Wie hierin verwendet, soll das Kammcopolymer (A) für ein Copolymer stehen, das insbesondere durch freie radikalische Polymerisation wenigstens eines (Meth-)Acrylatmonomers oder eines Monomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren erhältlich ist.

*(Meth-)Acrylatmonomer*

Das Kammcopolymer (A) der Polymerzusammensetzung (P) ist durch Polymerisation aus dem wenigstens einen (Meth-)Acrylatmonomer oder eines Monomerengemisches von zwei oder mehr, beispielsweise von drei oder vier (Meth-)Acrylatmonomeren in Gegenwart des wenigstens einen Makromers herstellbar. An der Polymerisation können ferner weitere copolymerisierbare Monomere teilnehmen. Das wenigstens eine (Meth-)Acrylatmonomer oder das Monomerengemisch umfassend das wenigstens eine (Meth-)Acrylatmonomer macht dabei bevorzugt 50-99, besonders bevorzugt 75-95, ganz besonders bevorzugt 85-90 Gewichtsprozent aller an der Polymerisation teilnehmenden Bestandteile aus, d.h. sämtlicher zum Kammcopolymer (A) führender Bestandteile, d.h. sämtlicher copolymerisierbarer Monomere, Makromere, einschließlich dem wenigstens einen (Meth-)Acrylatmonommer. Das Makromer liegt bevorzugt in einem Anteil von 1-50, bevorzugter 5-25, besonders bevorzugt 10-15 Gewichtsprozent vor, bezogen auf alle an der zum Kammcopolymer (A) führenden Polymerisation teilnehmenden Bestandteile, d.h. bezogen auf sämtliche copolymerisierbare Monomere und Makromere, einschließlich dem wenigstens einen (Meth-)Acrylatmonommer.

Das wenigstens eine (Meth-)Acrylatmonomer kann ein Monomerengemisch von zwei oder mehr, beispielsweise von drei oder vier (Meth-)Acrylatmonomeren sein und umfasst bevorzugt wenigstens ein Monomer ausgewählt aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, bevorzugt wenigstens ein Monomer der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat und Decylacrylat.

In einer bevorzugten Ausführungsform der Erfindung findet die Polymerisation des wenigstens einen (Meth-)Acrylatmonomers oder des Monomerengemisches von zwei oder mehr (Meth-)Acrylatmonomeren (im folgenden "Monomerengemisch") in Gegenwart wenigstens eines weiteren copolymerisierbaren Monomers statt. Dieses weitere, copolymerisierbare Monomer ist bevorzugt ausgewählt aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

Das wenigstens eine (Meth-)Acrylatmonomer, das - wie hierin beschrieben - durch Polymerisation in Gegenwart des wenigstens einen Makromers zu dem Kammcopolymer (A) polymerisierbar ist, wird dabei bevorzugt so ausgewählt, dass die kontinuierliche Acrylatphase der erfindungsgemäßen, mehrphasigen Polymerzusammensetzung eine statische Glasübergangstemperatur, Tg(Ac) von weniger als -10 °C, bevorzugt in einem Bereich von -60 °C bis -20 °C, besonders bevorzugt in einem Bereich von -50 bis -30 °C aufweist. Hierzu kommen bevorzugt wenigstens ein, bevorzugter wenigstens zwei sogenannte niedrig-Tg-(Meth-)Acrylatmonomere zum Einsatz, deren Homopolymere eine statische Glasübergangstemperatur (Tg), gemessen nach der DSC Methode (Messmethode A4), von 40 °C oder weniger, bevorzugt 25 °C oder weniger aufweisen. Entsprechende "niedrig-Tg-Monomere" sind in J. Brandrup, E.H. Immergut, E.A. Grulke, Polymer Handbook, 4th Edition, 1998, beschrieben. In einer bevorzugten Ausführungsform umfasst das wenigstens eine (Meth-)Acrylatmonomer wenigstens ein (Meth-)Acrylatmonomer mit einem C1-C18 Alkylrest in der Estergruppe, bevorzugt Butylacrylat, Amylacrylat, 2-Ethylhexylacrylat, Isooctylacrylat und Decylacrylat.

Das wenigstens eine (Meth-)Acrylatmonomer oder, im Falle eines Gemisches mehrerer (Meth-)Acrylatmonomere, das Monomerengemisch umfassend diese (Meth-)Acrylatmonomere, ist also bevorzugt ein niedrig-Tg-Monomer oder ein Gemisch solcher Monomere. Dieses niedrig-Tg-Monomer oder Gemisch liegt bevorzugt in einem Anteil von 43-97 Gewichtsprozent vor, bezogen auf alle an der Polymerisation, die zum Kammcopolymer (A) führt, teilnehmenden Bestandteile. In dieser bevorzugten Ausführungsform findet die Polymerisation des wenigstens einen (Meth-)Acrylatmonomers vorteilhafter Weise in Gegenwart von Acrylsäure, Methacrylsäure, Itaconsäure, Itaconsäureanhydrid, Maleinsäure, Maleinsäureanhydrid und/oder einem weiteren, sogenannten hoch-Tg-Monomeren statt, dessen Homopolymere eine statische Glasübergangstemperatur (Tg), gemessen nach der DSC Methode (Messmethode A4), von mehr als 40 °C, bevorzugt mehr als 80 °C aufweisen. Entsprechende "hoch-Tg-Monomere" sind in J. Brandrup, E.H. Immergut, E.A. Grulke, Polymer Handbook, 4th Edition, 1998, beschrieben. Acrylsäure, Methacrylsäure, Itaconsäure, Itaconsäureanhydrid, Maleinsäure, Maleinsäureanhydrid und/oder das(die) andere(n), sogenannte(n) hoch-Tg-Monomer(e) liegen bevorzugt in einem Anteil von 2-7, besonders bevorzugt in einem Anteil von 2-6, ganz besonders bevorzugt in einem Anteil von 3-5 Gewichtsprozent, bezogen auf das Gesamtgewicht aller an der Polymerisation teilnehmenden Bestandteile, d.h. aller Monomere und Makromere vor.

In einer bevorzugten Ausführungsform der Erfindung ist das Kammcopolymere (A) also erhältlich durch Polymerisation wenigstens eines (Meth-)Acrylatmonomeren oder eines Monomerengemisches von zwei oder mehr (Meth-)Acrylatmonomeren, wobei es sich bei diesen (Meth-)Acrylatmonomeren um niedrig-Tg-Monomere handelt, in Gegenwart von 2-7 Gewichtsprozent, bezogen auf das Gesamtgewicht sämtlicher an der Polymerisation teilnehmenden Bestandteile, wenigstens eines Monomers, das ausgewählt ist aus der Gruppe bestehend aus Acrylsäure, Methacrylsäure, Itaconsäure, Itaconsäureanhydrid, Maleinsäure und Maleinsäureanhydrid.

Mit anderen Worten nehmen an der Polymerisation, die zu dem Kammcopolymeren (A) führt, neben dem wenigstens einen Makromeren bevorzugt wenigstens drei Monomere Teil, von denen eines ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode, von mehr als 40 °C, bevorzugt mehr als 80 °C aufweisen (hierin auch als "hoch-Tg-Monomer" bezeichnet). Wie hierein verwendet orientiert sich der Ausdruck "hoch-Tg-Monomer" an der statischen Glasübergangstemperatur der Homopolymere, wie in J. Brandrup, E.H. Immergut, E.A. Grulke, Polymer Handbook, 4th Edition, 1998, beschrieben. Bevorzugt nimmt also an der zum Kammcopolymer (A) führenden Polymerisation (im Folgenden auch "Polymerisation") lediglich eines dieser hoch-Tg-Comonomere Teil, besonders bevorzugt Acrylsäure oder Methacrylsäure, bevorzugt Acrylsäure. Erfindungsgemäß wird dieses hoch-Tg-Comonomer bevorzugt in einer Menge von 2-7 Gewichtsprozent, bezogen auf das Gesamtgewicht aller an der Polymerisation teilnehmenden Bestandteile, verwendet, bevorzugt in einer Menge von 2-6, besonders bevorzugt in einer Menge von 3-5 Gewichtsprozent.

In einer Ausführungsform findet die Polymerisation in Gegenwart von bis zu 20 Gewichtsprozent, bevorzugt bis zu 15 Gewichtsprozent (bezogen auf das Gesamtgewicht aller an der Polymerisation teilnehmenden Bestandteile) wenigstens eines weiteren copolymerisierbaren Monomers statt, ausgewählt aus der Gruppe bestehend aus Isobornylacrylat, Stearylacrylat, Isostearylacrylat, Hydroxyethylacrylat, Hydroxyethylmethacrylat, 4-Hydroxybutylacrylat, Vinylacetat, Vinylbutyrat, Vinylpropionat, Vinylisobutyrat, Vinylvalerat, Vinylversatat, N-Vinylpyrollidon und N-Vinylcaprolactam, bevorzugt ausgewählt aus Isobornylacrylat, Stearylacrylat, Isostearylacrylat, Vinylacetat, Vinylbutyrat, Vinylpropionat, Vinylisobutyrat, Vinylvalerat, Vinylversatat, N-Vinylpyrollidon und N-Vinylcaprolactam.

In einer besonders bevorzugten Ausführungsform nimmt an der Polymerisation kein Hydroxyalkyl(meth)acrylat teil. Es wird vermutet, dass die Polymerisation des wenigstens einen (Meth-)Acrylatmonomers in Abwesenheit von Hydroxyalkyl(meth)acrylaten die Bereitstellung besonders vorteilhafter Kammcopolymere (A) erlaubt.

Besonders bevorzugt kommen bei der Polymerisation Gemische, enthaltend Acrylsäure, Butylacrylat, 2-Ethylhexylacrylat und Isobornylacrylat, besonders bevorzugt Acrylsäure, Butylacrylat und 2-Ethylhexylacrylat zum Einsatz.

Beispielhafte, bevorzugte Gemische bestehen aus 3-7 Gewichtsprozent Acrylsäure, 45-65 Gewichtsprozent Butylacrylat, 20-27 Gewichtsprozent 2-Ethylhexylacrylat und bis zu 15 Gewichtsprozent Isobornylacrylat, wobei sich die Angaben in Gewichtsprozent auf das Gesamtgewicht des Comonomerengemisches und des wenigstens einen Makromers beziehen, d.h. auf alle an der Polymerisation, die zum Kammcopolymer (A) führt, teilnehmenden Bestandteile.

*Makromer*

Das wenigstens eine (Meth-)Acrlylatmonomer wird in Gegenwart wenigstens eines Makromers unter Ausbildung eines Kammcopolymers (A) polymerisiert. Makromere sind relativ niedermolekulare Polymere mit einer reaktiven, copolymerisierbaren funktionellen Gruppe an einem oder mehreren Enden des Polymers. Das wenigstens eine Makromer ist ausgewählt aus der Gruppe bestehend aus polymerisierbaren Ethylen-Butylen-, Ethylen-Propylen-, Ethylen-Butylen-Propylen- und Isobutylen-Makromeren. Die Makromerhauptketten dieser Ethylen-Butylen-, Ethylen-Propylen-, Ethylen-Butylen-Propylen- und Isobutylen-Makromere sind bevorzugt vollständig hydriert. Sie sind erhältlich mittels anionischer Polymerisation der entsprechenden Monomere. Ein bekanntes Verfahren umfasst beispielsweise eine anionische Polymerisation zur Herstellung Hydroxyl-terminierter, konjugierter Dienpolymere aus Monomeren wie 1,3-Butadien und/oder Isopren. Geeignete kautschukartige Monoole wie das Kraton® L 1203 werden von der Firma Kraton Polymers Company angeboten. In einem anschließenden Schritt kann die terminale Hydroxyfunktion zu einer Acryloyl- oder Methacryloylfunktionalität umgesetzt werden.

Das Makromer weist erfindungsgemäß ein Molekulargewicht von 1.000 bis 500.000 g/mol, bevorzugt 2.000 bis etwa 30.000 g/mol, besonders bevorzugt 2.000 bis 10.000 g/mol auf (gemessen mittels Gelpermeationschromatographie (GPC), Polystyrol als Standard, Messmethode A1) auf. In einer bevorzugten Ausführungsform der Erfindung hat das Makromer eine Glasübergangstemperatur gemessen nach der DSC-Methode, von -30°C oder weniger, bevorzugt von -70°C bis -50°C. Entsprechende Makromere sind kommerziell erhältlich, z.B. von der Firma Kuraray Co., Ltd. Ein bevorzugtes Makromer ist L-1253 der Firma Kuraray Co., Ltd. Makromere, wie hierin verwendet, sind relativ niedermolekulare Polymere mit einer funktionellen, copolymerisierbaren reaktiven Gruppe, insbesondere einer Acrylat-oder Methacrylat-funktionellen Gruppe an einem oder mehreren Enden des Polymers.

*Kammcopolymer (A)*

Durch Polymerisation, vorzugsweise durch freie radikalische Polymerisation des wenigstens einen (Meth-)Acrylatmonomers oder eines Monomerengemisches umfassend das (Meth-)Acrylatmonomer in Gegenwart des wenigstens einen Makromers ist das Kammcopolymer (A) erhältlich. Bei dem Kammcopolymer (A) handelt es sich um ein kammartiges Copolymer, das mitunter auch als "Pfropfcopolymer" bezeichnet wird. Die Bezeichnung "Pfropfcopolymer" ist hierbei jedoch insofern missverständlich, als sich das Kammcopolymer vorliegend durch Polymerisation der Comonomere des Comonomerengemisches in Gegenwart der Makromermoleküle bilden lässt. Statt durch Pfropfcopolymerisation, bei der ein bereits bestehendes Polymerrückgrat als Anknüpfungspunkt für Ketten weiterer Monomere dient, werden die Seitenketten des Kammcopolymers (A), wie hierein verwendet, also bevorzugt während der Polymerisation der Comonomere mit den copolymerisierbaren reaktiven Gruppen des Makromers, bevorzugt mit den Acrylat- oder Methacrylat-funktionellen Gruppen des Makromers, über die Makromerketten eingeführt. Die copolymerisierbaren reaktiven Gruppen des Makromers werden insofern bereits während der Polymerisation des Comonomerengemisches in das Polyacrylatrückgrat (Hauptkette) eingebaut. Die Ethylen-Butylen-, Ethylen-Propylen-, Ethylen-Butylen-Propylen- und/oder Isobutylen-Ketten des Makromers bilden die Seitenketten des Kammcopolymers (A) (hierin auch als Kohlenwasserstoff-Seitenketten des Kammcopolymers (A) bezeichnet). Aufgrund seiner Struktur wird das Kammcopolymer (A) auch als "Flaschenbürstenpolymer" (engl.: bottle brush polymer) bezeichnet. In der Polymerzusammensetzung (P) führt diese Struktur und der lipophile Charakter der Kohlenwasserstoffseitenketten zur Ausbildung einer kontinuierlichen Acrylatphase und einer diskontinuierlichen Kohlenwasserstoffphase Kw des Kammcopolymers (A). Die Kohlenwasserstoffphase Kw liegt bevorzugt mikrophasensepariert vor. Es wird vermutet, dass das phasenseparierte, bevorzugt mikrophasenseparierte Kammcopolymer (A) aufgrund der Ausbildung der kontinuierlichen Acrylatphase und der diskontinuierlichen Kohlenwasserstoffphase unterschiedliche Materialeigenschaften, nämlich einen kautschukartigen, d.h. vorliegend einen hydrophoben, thermoplastischen Charakter der Seitenketten und die inhärent haftklebrigen Eigenschaften des Polyacrylatrückgrates miteinander vereint.

Der Anteil des wenigstens einen Makromers beträgt 1 bis 50 Gewichtsprozent, bevorzugt 5 bis 25 Gewichtsprozent, und besonders bevorzugt 10 bis 15 Gewichtsprozent bezogen auf das Gesamtgewicht aller an der Polymerisation, die zum Kammcopolymer (A) führt, teilnehmenden Bestandteile. Mit anderen Worten machen die Makromereinheiten innerhalb des Kammcopolymers (A) 5 bis 25 Gewichtsprozent, und bevorzugt 10 bis 15 Gewichtsprozent, bezogen auf das Gesamtgewicht des Kammcopolymers (A) aus.

In einer weiteren bevorzugten Ausführungsform wird die Polymerisation in Gegenwart wenigstens eines weiteren, nicht-polyolefinischen Makromers durchgeführt. Dieses zusätzliche, nicht-polyolefinische Makromer ist bevorzugt ausgewählt aus der Gruppe der Polymethylacrylate, der Polystyrole, der Polydimethylsiloxane, der Polyethylenoxide und der Polypropylenoxide. Auch bei diesen weiteren nicht-polyolefinischen Makromeren handelt es sich um copolymerisierbare Makromere. Mit anderen Worten weisen auch diese nicht-polyolefinischen Makromere bevorzugt eine funktionelle Acrylat- oder Methacrylatgruppe am Ende der Polymerkette des Makromers auf. In einer Ausführungsform der Erfindung beträgt der Anteil des wenigstens einen weiteren, nicht-polyolefinischen Makromers bis zu 20, bevorzugt bis zu 10, besonders bevorzugt bis zu 5 Gewichtsprozent, bezogen auf das Gesamtgewicht aller an der Polymerisation teilnehmenden Bestandteile.

*Kohlenwasserstoffkomponente (B)*

Die mehrphasige Polymerzusammensetzung (P) umfasst wenigstens eine Kohlenwasserstoffkomponente (B), ihrerseits umfassend wenigstens ein Weichharz und wenigstens ein Festharz, die in der Kohlenwasserstoffphase des Kammcopolymers (A) löslich ist. Der Ausdruck "löslich" bedeutet in diesem Zusammenhang, dass sowohl das Weichharz als auch das Festharz mit den Kohlenwasserstoffseitenketten des Kammcopolymers (A) kompatibel sind, sodass sich innerhalb der Polymerzusammensetzung (P) eine gemeinsame Kohlenwasserstoffphase Kw1 ausbildet, die aus den Kohlenwasserstoffseitenketten des Kammcopolymers (A) und der Kohlenwasserstoffkomponente (B) besteht. Das Vorliegen dieser gemeinsamen Kohlenwasserstoffphase kann mittels DSC Methode nachgewiesen werden: Sofern sich die Zusammensetzung bestehend aus Kammcopolymer (A) und Kohlenwasserstoffkomponente (B) bei der DSC Messung lediglich hinsichtlich der Beträge der statischen Glasübergangstemperaturen von dem Kammcopolymer (A) vor der Zugabe der Komponente (B) unterscheidet, liegt keine zusätzliche Phase vor, die im Sinne einer zusätzlichen statischen Glasübergangstemperatur hätte ermittelt werden können. Die Kohlenwasserstoffphase der Polymerzusammensetzung wird vielmehr über ihre statische Glasübergangstemperatur, Tg(Kw1), charakterisiert. Dies bedeutet, dass die sich aus den Seitenketten des Kammcopolymers (A) und der Komponente (B) ergebende Kohlenwasserstoffphase Kw1 nur eine, von der Tg des reinen Kammcopolymers (A) verschiedene, Glasübergangstemperatur Tg (Kw1) aufweist. Wäre (B) nicht in der Kohlenwasserstoffphase Kw des Kammcopolymers löslich, wären zwei Kohlenwasserstoffphasen-Tg - nämlich eine für die Kohlenwasserstoffphase des (reinen) Kammcopolymers A und eine für die Komponente (B) - feststellbar. Entsprechend ist auch die Acrylatphase innerhalb der Polymerzusammensetzung, zu der das Acrylatrückgrat

des Kammcopolymers (A) beiträgt, mittels DSC hinsichtlich ihrer Glasübergangstemperatur (Tg (Ac)) bestimmbar.

Bei der Kohlenwasserstoffkomponente (B) handelt es sich bevorzugt um ein Festharz (B1) und ein Weichharz (B2), jeweils mit einem zahlenmittleren Molekulargewicht Mn (bestimmt mittels GPC, Methode A1) von 1.000 g/mol oder weniger. Festharze im Sinne der vorliegenden Erfindung sind Kohlenwasserstoffharze mit einem Erweichungspunkt von mindestens 70°C, bevorzugt 70 bis 150 °C, besonders bevorzugt 80 bis 120 °C. Weichharze, wie hierin verwendet, sind Kohlenwasserstoffharze mit einem Erweichungspunkt von höchstens 20°C. Die jeweiligen Erweichungspunkte von Festharz und Weichharz sind Ring- und Ball-Erweichungspunkte (gemessen nach ASTM E28-99).

Die Kohlenwasserstoffharze (B-1) und (B-2) liegen bevorzugt in einem Gewichtsverhältnis, (B-1) : (B-2), von 41:59 bis 70:30 vor. In einer besonders bevorzugten Ausführungsform der Erfindung liegt der Anteil an Kohlenwasserstoffharz (B-1) mit einem Erweichungspunkt von mindestens 70°C zwischen 41 und 70 Gewichtsprozent, besonders bevorzugt zwischen 50 und 60 Gewichtsprozent, bezogen auf die Gesamtmenge aller Kohlenwasserstoffharze der mehrphasigen Polymerzusammensetzung.

Geeignete Festharze sind Erdöl-basierte synthetische Kohlenwasserstoffe. Beispiele umfassen Harze basierend auf aliphatischen Olefinen. Entsprechende Harze sind erhältlich von Cray Valley unter der Bezeichnung Wingtack® 95, von Exxon unter dem Handelsnamen Escorez®, von Arakawa Chemical unter dem Handelsnamen Arkon® (P-Reihe), von Hercules Speciality Chemicals unter dem Handelsnamen Regalrez® (1030-, 2000-, 5000-Serie) und unter der Bezeichnung Regalite® (R-Reihe), und von Yasuhara Yushi Kogyo Company unter dem Handelsnamen Clearon®.

Geeignete Weichharze sind das C5-Harz Wingtack® 10 von Cray Valley, das Polyterpenharz Dercolyte® LTG sowie die vollhydrierten Kohlenwasserstoffharze Regalite® 1010 und Piccotac® 1020.

In einer weiteren Ausführungsform der Erfindung beträgt der Anteil der wenigstens einen in der Kohlenwasserstoffphase des Kammcopolymers (A) löslichen Kohlenwasserstoffkomponente (B) an der Kohlenwasserstoffphase der Polymerzusammensetzung, deren Tg, Tg (Kw1), mittels DSC bestimmbar ist, mindestens 80 Gewichtsprozent bezogen auf den Gewichtsanteil der Kohlenwasserstoffphase an der Polymerzusammensetzung, d.h. bezogen auf die Menge an Kohlenwasserstoffseitenketten des Kammcopolymers (A) und der Kohlenwasserstoffkomponente (B).

Es hat sich überraschend herausgestellt, dass sich die Kohlenwasserstoffharze (B-1) und (B-2) zur Bereitstellung besonders vorteilhafter Polymerzusammensetzungen (P) eignen, wenn (B-1) und (B-2) in einem Anteil von 36 bis 70 Gewichtsteilen, bevorzugt 40 bis 55 Gewichtsteilen, bezogen auf 100 Gewichtsteile der Polymerzusammensetzung (P), vorliegen. Im Falle hoher Anteile der Kohlenwasserstoffverbindung (B-2) an der Polymerzusammensetzung (P) kann es zur Ausbildung einer zusätzlichen Kohlenwasserstoffphase Kw2 kommen, die zusätzlich zu der Kohlenwasserstoffphase Kw1 vorliegt. Eine mögliche Erklärung hierfür ist, dass das Weichharz (B-2) in einer Menge zugegeben wird, die die Löslichkeitsgrenze der Kohlenwasserstoffverbindung (B-2) innerhalb der Kohlenwasserstoffphase des Kammcopolymers (A) übersteigt. Diese zusätzliche Kohlenwasserstoffphase kann beispielsweise mittels dynamisch mechanischer Analyse (DMA) gemäß ASTM D4065-12 nachgewiesen werden.

*Additive und Klebharze*

Neben dem Kammcopolymer (A) und der Kohlenwasserstoffkomponente (B) umfassend wenigstens ein Weichharz und wenigstens ein Festharz kann die Polymerzusammensetzung wenigstens ein Additiv und/oder Klebharz enthalten. Additive wie hierin verwendet umfassen
Weichmacher, Öle und in der Acrylatphase des Kammcopolymers (A) lösliche Harze, bevorzugt Kolophoniumester und/oder Terpenphenolharze. Bevorzugte Kolophoniumester sind hydrierte Kolophoniumester. Bevorzugte Terpenphenolharze sind alterungsbeständige Terpenphenolharze.

Ebenfalls möglich ist die Zugabe eines oder mehrerer - von den Bestandteilen der Kohlenwasserstoffkomponente (B) verschiedener - Klebharze. Der Einsatz geeigneter Klebharze wie z. B. Inden-Cumaron-Harze erlaubt die Feinabstimmung der statischen Glasübergangstemperatur der Kohlenwasserstoffphase der Polymerzusammensetzung, Tg(Kw1). Die Additive und Klebharze liegen, sofern vorhanden, bevorzugt in einer Menge von bis zu 20 Gewichtsteilen, bevorzugt von bis zu 5 Gewichtsteilen, bezogen auf 100 Gewichtsteile der Polymerzusammensetzung (P) vor. Es hat sich jedoch herausgestellt, dass die mehrphasige Polymerzusammensetzung (P) bereits ohne Zusatz von Klebharzen, und insbesondere ohne Zusatz von Harzen, die in der Acrylatphase des Kammcopolymers (A) löslich sind, zufriedenstellende Klebkräfte gegenüber Oberflächen von LSE-Materialien ausbildet. Das erfindungsgemäße mehrschichtige Produkt gewährleistet insofern dauerhaft hohe Klebkräfte auf Oberflächen von LSE-Materialien auch ohne den Einsatz entsprechender Harze. Die erfindungsgemäßen mehrschichtigen Produkte erlauben dauerhafte Verklebungen ferner dann, wenn es zu einer Wanderung von in der Acrylatphase löslichen Harzen (sofern vorhanden) aus der mehrphasigen Polymerzusammensetzung (P) in die Schicht des Acrylat-basierten Schaumträgers (S) kommen sollte, ohne dass dies zu einem bedeutenden Verlust der Klebkraft über die Zeit führt. Dies liegt daran, dass die Polymerzusammensetzung (P) bereits inhärent zufriedenstellende Klebkräfte gegenüber Oberflächen von LSE-Materialien ausbildet.

In einer weiteren, bevorzugten Ausführungsform enthält die Polymerzusammensetzung eine zusätzliche Kohlenwasserstoffverbindung (C), deren zahlenmittleres Molekulargewicht (Mn) mehr als 1.000 g/mol beträgt. Bevorzugt handelt es sich bei dieser zusätzlichen Kohlenwasserstoffverbindung (C) um ein weiteres Weichharz. Insbesondere weisen das Weichharz und das Festharz der Polymerzusammensetzung (P) jeweils ein zahlenmittleres Molekulargewicht Mn von 1.000 g/mol oder weniger auf, und die Polymerzusammensetzung (P) enthält eine zusätzliche Kohlenwasserstoffverbindung (C), deren zahlenmittleres Molekulargewicht Mn gemessen nach der GPC-Methode, mehr als 1.000 g/mol beträgt. In einer besonderen Ausführungsform der Erfindung bildet die Kohlenwasserstoffverbindung (C) eine diskontinuierliche Phase innerhalb der Acrylatphase der Polymerzusammensetzung. Mit anderen Worten liegen in dieser besonderen Ausführungsform zwei unterschiedliche diskontinuierliche Phasen innerhalb der kontinuierlichen Phase der Polymerzusammensetzung vor. Gemäß dieser Ausführungsform liegt die statische Glasübergangstemperatur dieser zusätzlichen Phase innerhalb der Polymerzusammensetzung, Tg(C), zwischen den Glasübergangstemperaturen Tg(Kw1) und Tg(Ac) der Polymerzusammensetzung.

Weiterhin können Alterungsschutzmittel, Lichtschutzmittel und Ozonschutzmittel als Additive verwendet werden. Als Alterungsschutzmittel können Irganox® Typen der Fa. BASF bzw. Hostanox® der Firma Clariant, bevorzugt primäre, z.B. 4-Methoxyphenol oder Irganox® 1076, und sekundäre Alterungsschutzmittel, z.B. Irgafos® TNPP oder Irgafos® 168 der Fa. BASF, auch in Kombination miteinander eingesetzt werden. Weitere geeignete Alterungsschutzmittel sind Phenothiazin (C-Radikalfänger) sowie Hydrochinonmethylether in Gegenwart von Sauerstoff sowie Sauerstoff selbst. Als Lichtschutzmittel können UV-Absorber (Cyasorb®-serie) oder sterisch gehinderte Amine (Tinuvin®-Serie) verwendet werden.

In einer bevorzugten Ausführungsform der Erfindung ist das Kammcopolymer (A) oder die mehrphasige Polymerzusammensetzung (P) vernetzt. Als mögliche Vernetzer, mit denen beispielsweise Hydroxy-, Säureanhydrid- oder Caprolactam- funktionelle Gruppen innerhalb der Acrylatphase des Kammcopolymers zur Kohäsionssteigerung der Polymerzusammensetzung (P) ausgenutzt werden können, kommen insbesondere koordinativ oder kovalent bindende chemische Vernetzungsmittel in Betracht. Beispielhafte koordinative Vernetzer sind Metall-Chelate wie z.B. Aluminium- und Titan-Chelat. Beispielhafte kovalente Vernetzer, die insbesondere zur Steigerung der Hochtemperaturscherfestigkeit verwendet werden können, sind Isocyanate, Epoxide, Aziridine, Carbodiimide und Oxazoline. Vernetzer werden im Sinne der vorliegenden Erfindung bevorzugt in einer Menge von etwa 0.02 bis etwa 2 Gewichtsprozent, bezogen auf das Gesamtgewicht des Kammcopolymers (A), eingesetzt.

*Verfahren zur Herstellung der mehrphasigen Polymerzusammensetzung (P)*

Die Polymerzusammensetzung (P) kann hergestellt werden, indem zunächst das hierin beschriebene wenigstens eine (Meth-)Acrylatmonomer oder ein Monomerengemisch enthaltend das wenigstens eine (Meth-)Acrylatmonomer in Gegenwart des wenigstens einen Makromers, ausgewählt aus der Gruppe bestehend aus polymerisierbaren Ethylen-Butylen-, Ethylen-Propylen-, Ethylen-Butylen-Propylen- und Isobutylen-Makromeren unter Ausbildung des Kammcopolymers (A) polymerisiert wird. Das Kammcopolymer (A) kann hierbei durch herkömmliche dem Fachmann geläufige Polymerisationstechniken hergestellt werden. Diese Verfahren umfassen Lösungspolymerisations-, Suspensionspolymerisations-, Emulsionspolymerisations- und Substanzpolymerisationsverfahren. Bevorzugt werden die Kammcopolymere (A) in Lösung mittels freier radikalischer Polymerisation hergestellt. Bevorzugte Lösungsmittel und Lösungsmittelgemische gewährleisten eine ausreichende Löslichkeit der Makromere und sind Ethylacetat, Aceton, Methylisopropylketon, Hexan und/oder Heptan sowie Toluol und Mischungen der sogenannten Lösungsmittel. In einer bevorzugten Ausführungsform der Erfindung wird nach der Polymerisation der Restmonomergehalt unter Verwendung bekannter Verfahren aus dem Stand der Technik reduziert.

Das Acrylatrückgrat und die Kohlenwasserstoffseitenketten des Kammcopolymers liegen nach Entfernen des Lösungsmittels (sofern vorhanden) in Form einer phasenseparierten, bevorzugt mikrophasenseparierten Struktur vor, bei der die Kohlenwasserstoffphase Kw1, die aus den Kohlenwasserstoffseitenketten des Kammcopolymers (A) und der in dieser Kohlenwasserstoffphase löslichen wenigstens einen Kohlenwasserstoffkomponente (B) gebildet wird, diskontinuierlich in der kontinuierlichen Acrylatphase der Polymerzusammensetzung (P) vorliegt. Kontinuierlich bedeutet in diesem Zusammenhang, dass die Acrylatphase die einzelnen Abschnitte der diskontinuierlichen Kohlenwasserstoffphase (auch Domänen genannt) wie eine Matrix umhüllt. Das Vorliegen einer mikrophasenseparierten Struktur äußert sich in Form eines transparenten Erscheinungsbildes der Polymerzusammensetzung (P). In einer solchen Polymerzusammensetzung haben die Domänen der Kohlenwasserstoffphase eine Größe, die unterhalb der Wellenlänge des sichtbaren Lichts (390-780 nm) liegt.

*Haftklebmasse*

Die vorliegende Erfindung betrifft ferner mehrschichtige Produkte, bei denen die Polymerzusammensetzung (P) als Haftklebmasse ausgebildet ist. Überraschend wurde gefunden, dass sich die als Haftklebmassen ausgebildete Polymerzusammensetzung (P) besonders zur Verklebung von Substraten mit unpolaren Oberflächen eignet. Die Haftklebmassen der vorliegenden Erfindung sind dabei dennoch zur Verklebung polarer Oberflächen geeignet. Unter unpolaren Oberflächen werden Substrate mit einer niedrigen Oberflächenenergie bzw. niedrigen Oberflächenspannung verstanden, insbesondere mit einer Oberflächenspannung von kleiner als 45 mN/m, bevorzugt von kleiner als 40 mN/m und besonders bevorzugt von kleiner 35 mN/m. Zur Bestimmung der Oberflächenspannung wird der Kontaktwinkel nach DIN EN 828 gemessen.

Die Polymerzusammensetzung (P) wird bevorzugt in Filmform, besonders bevorzugt als Klebeband bereitgestellt. Hierzu kann die mehrphasige Polymerzusammensetzung entweder als solche oder nach Zusatz von Klebharzen mittels geläufiger Beschichtungsverfahren aus Lösung zu einer Schicht auf einem Trägermaterial (Folie, Schaum, syntaktischer Schaum, Gewebe, Papier) ausgeformt werden, wobei die Haftklebmasseschicht ein Flächengewicht von 40 bis 100 g/m2 aufweist. Besonders bevorzugt wird die mehrphasige Polymerzusammensetzung (P) direkt auf den Acrylat-basierten Schaumträger (S) aufgebracht.

Nachfolgend wird der Acrylat-basierte Schaumträger (S) näher beschrieben.

*Acrylat-basierter Schaumträger (S)*

Das erfindungsgemäße mehrschichtige Produkt umfasst wenigstens eine Schicht eines Acrylat-basierten Schaumträgers (S). Der Schaumträger (S) weist eine Ober- und eine Unterseite auf. Auf wenigstens einer dieser Seiten ist die hierin beschriebene mehrphasige Polymerzusammensetzung (P) aufgetragen. Mit anderen Worten ist wenigstens eine dieser Seiten mit der mehrphasigen Polymerzusammensetzung (P) verbunden. Der Einsatz der mehrphasigen Polymerzusammensetzung (P) vermeidet dabei die Probleme üblicher Acrylat-basierter Klebmassen, die zur Verklebung auf unpolaren Oberflächen als Gemisch mit einem Klebharz bereitgestellt werden müssten. Dies liegt daran, dass die Polymerzusammensetzung (P) bereits ohne Zusatz von in der Acrylatphase löslichen Klebharzen zufriedenstellende Klebkräfte gegenüber Oberflächen von LSE-Materialien ausbildet und diese auch ohne die oben genannten Klebharze beibehält. Auch haben sich die mehrphasigen Polymerzusammensetzungen (P) als phasenstabile Systeme herausgestellt, bei denen es zu keiner Wanderung von Bestandteilen der Kohlenwasserstoffkomponente (B) in die Matrix der Acrylat-basierten Schaumschicht (S) kommt. Insofern geht mit dem Einsatz der Polymerzusammensetzung (P) auf der Schicht des Acrylat-basierten Schaumträgers (S) nicht die Gefahr einher, dass es nach einer Verklebung von Substraten mit LSE-Oberflächen zu einem Verlust der Klebkraft über die Zeit kommt, wie es mit typischen Acrylat-basierten Klebmassen zu erwarten wäre, die ihre Klebkräfte gegenüber LSE-Oberflächen nur durch Verwendung eines in der Acrylatphase des Klebstoffes löslichen Harzes ausbilden .

Die wenigstens eine Schicht des Acrylat-basierten Schaumträgers (S) enthält wenigstens ein Acrylat, das im folgenden auch als "Acrylat, das die Schicht des Acrylat-basierten Schaumträgers (S) bildet" oder als "das die Schicht des Acrylat-basierten Schaumträgers (S) bildende Acrylat" oder als "das die Schicht des Schaumträgers (S) bildende Acrylat" oder als "Acrylat, das die Schicht des Schaumträgers bildet" oder ähnlich bezeichnet wird. Dieses Acrylat kann mittels bekannter Verfahren in einen Schaum überführt werden, so dass ein Acrylat-basierter Schaum vorliegt. Mögliche Techniken umfassen die Verwendung von Blähmitteln, das Mischen mit expandierbaren, vor-expandierten und bereits vollexpandierten Hohlkugeln; nicht expandierbaren Hohlkugeln; sowie den Eintrag von Gasen.

In einer bevorzugten Ausführungsform ist der Acrylat-basierte Schaumträger (S) ein viskoelastischer Schaumträger. Bevorzugt ist der Acrylat-basierte Schaumträger (S) ein syntaktischer Schaum. Bei einem syntaktischen Schaum sind Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

In einer weiteren Ausführungsform der Erfindung ist das die Schicht des Schaumträgers (S) bildende Acrylat ein Polyacrylat, das erhältlich ist durch freie oder kontrollierte radikalische Polymerisation eines oder mehrerer Acrylate und Alkylacrylate. Besonders bevorzugt ist das Acrylat, das die Schicht des Schaumträgers (S) bildet, ein vernetztes Polyacrylat.

Der Acrylat-basierte Schaumträger (S) des erfindungsgemäßen mehrschichtigen Produktes kann neben dem erfindungsgemäß vorgesehenen Polyacrylat alle dem Fachmann bekannten Polymere und/oder Mischungen aus Polymeren umfassen. Bevorzugt besteht der Schaumträger nur aus Polyacrylat als Gerüstpolymer.

Das Polyacrylat des Acrylat-basierten Schaumträger (S) ist bevorzugt durch eine freie oder kontrollierte radikalische Polymerisation einer oder mehrerer (Meth)Acrylsäuren oder (Meth)Acrylsäureester erhältlich und wird besonders bevorzugt thermisch vernetzt, um - gerade im Falle dicker Schaumträgerschichten - einen Vernetzungsgradienten zu verhindern, welcher aus einem photochemischen Vernetzungsverfahren oder einer Elektronenstrahlvernetzung resultieren kann.

In einer bevorzugten Ausführungsform der Erfindung werden für die Schicht des Schaumträgers (S) thermischvernetzbare Polymere auf Poly(meth)acrylatbasis eingesetzt. Bevorzugt ist das die Schicht des Schaumträgers (S) bildende Acrylat erhältlich durch Polymerisation von Monomeren, bestehend aus Monomeren der folgenden Gruppen

(a1), (a2) und (a3). Unter "Polymerisation" wird an dieser Stelle die Reaktion verstanden, die zu dem Polyacrylat führt, das sich besonders zur Bildung der Schicht des Schaumträgers (S) eignet.

(a1) 70 bis 100 Gew.-%, bezogen auf alle an der Polymerisation teilnehmenden Monomere, Acrylsäureester und/oder Methacrylsäureester und/oder einer freien Säure gemäß der Strukturformel (I):

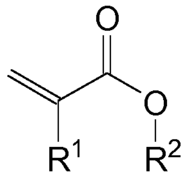

(I),

wobei $R^1$ H oder $CH_3$ ist; und $R^2$ H oder $C_1$-$C_{14}$-Alkyl darstellt; unter "$C_1$-$C_{14}$-Alkyl" werden vorliegend Alkylketten mit 1 bis 14 C-Atomen verstanden, wobei diese Alkylketten grad-kettige, d.h. lineare, und verzweigte Alkylgruppen umfassen;

(a2) 0 bis 30 Gew.-%, bezogen auf alle an der Polymerisation teilnehmenden Monomere, olefinisch ungesättigte Monomere, die mit den Monomeren der Gruppe (a1) copolymerisierbar sind und wenigstens eine funktionelle Gruppe aufweisen; bevorzugte "funktionelle Gruppen" der Monomere der Gruppe (a2) sind polare und/oder sterisch anspruchsvolle Gruppen mit Säureanhydrid-, substituierten oder unsubstituierten Aryl-, Aryloxyalkyl- und/oder Alkyloxyalkyl-Funktionalitäten, sowie heterocyclische Gruppen und N,N-Dialkylaminoalkyleinheiten;

(a3) optional weitere Acrylate und/oder Methacrylate und/oder olefinisch ungesättigte Monomere, bevorzugt in einem Anteil von 0 bis 5 Gew.-%, bevorzugt von mehr als 0 bis 5 Gew.-%, die mit den Monomeren der Gruppe (a1) copolymerisierbar sind und eine funktionelle Gruppe aufweisen, die mittels des Kupplungsreagenzes zu einer kovalenten Vernetzung führt.

Bevorzugt werden als Monomere der Gruppe (a1) Acrylmomonere, umfassend Acryl- und Methacrylsäureester mit Alkylketten mit 1 bis 14 C-Atomen, eingesetzt. Bevorzugte Beispiele sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat. Weitere Beispiele, die bevorzugt in geringen Mengen als Monomere der Gruppe (a1) verwendet werden können, sind Cyclohexylmethacrylate, Isobornylacrylat und Isobornylmethacrylate. Deren Anteil beträgt bevorzugt maximal bis zu 20 Gew.-%, besonders bevorzugt maximal bis zu 15 Gew.-%, jeweils bezogen auf die Gesamtmenge an Monomeren (a1).

Als Monomere der Gruppe (a2) werden bevorzugt Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, sowie Mischungen hiervon. Ebenso bevorzugt werden als Monomere der Gruppe (a2) aromatische Vinylverbindungen eingesetzt, wobei die aromatischen Kerne bevorzugt $C_4$-bis $C_{18}$-Gruppen umfassen und Heteroatome enthalten können. Besonders bevorzugte Beispiele solcher Monomere sind Styrol, 4-Vinylpyridin, *N*-Vinylphthalimid, Methylstyrol und 3,4-Dimethoxystyrol.

Als Monomere der Gruppe (a3) werden bevorzugt Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, $\beta$-Acryloyloxypropionsäure, Trichloracrylsäure, Fumarsäure, Crotonsäure, Aconitsäure, Dimethylacrylsäure, und 4-Vinylbenzoesäure, sowie Mischungen hiervon.

Besonders bevorzugte Monomere der Gruppe (a3) können vorteilhaft auch derart gewählt werden, dass sie funktionelle Gruppen enthalten, die eine nachfolgende strahlenchemische Vernetzung (beispielsweise durch Elektronenstrahlen oder UV) unterstützen. Geeignete copolymerisierbare Photoinitiatoren sind zum Beispiel Benzoinacrylat und Acrylat-funktionalisierte Benzophenonderivate. Monomere, die eine Vernetzung durch Elektronenbestrahlung unterstützen, sind zum Beispiel Tetrahydrofurfurylacrylat, *N-tert*-Butylacrylamid, Allylacrylat, wobei diese Aufzählung nicht abschließend ist.

In einer besonders bevorzugten Ausführungsform werden die Monomere der Gruppen (a1) bis (a3) derart gewählt, dass die resultierenden Polymere thermisch vernetzbar sind, insbesondere derart, dass die resultierenden Polymere haftklebende Eigenschaften entsprechend dem "Handbook of Pressure Sensitive Adhesive Technology" von

Donatas Satas (van Nostrand, New York, 1989) besitzen.

Die Art der Comonomere wird so gewählt, dass die Glasübergangstemperatur Tg(A) der Polymere unterhalb der vorgesehenen Anwendungstemperatur liegt und bevorzugt 15 °C oder weniger beträgt. Um dies zu erreichen, wird die mengenmäßige Zusammensetzung des Monomergemisches umfassend Monomere der Gruppen (a1) bis (a3) bevorzugt derart gewählt, dass sich nach der Fox-Gleichung (G1) (vgl. T.G. Fox, Bull. Am. Phys. Soc. 1956, 1, 123) der gewünschte Tg(A)-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die Bestimmung von Tg(A) (bzw. "$T_G$" gemäß obiger Gleichung G1) ist möglich mittels DSC-Methode (Messmethode A4).

Zur Herstellung geeigneter Polyacrylate, die für die Schicht des Acrylat-basierten Schaumträger (S) verwendet werden können, wird das bzw. werden die Monomere bevorzugt mittels konventioneller radikalischer Polymerisationen oder kontrollierter radikalischer Polymerisationen umgesetzt. Für die radikalisch verlaufenden Polymerisationen werden bevorzugt Initiatorsysteme eingesetzt, die radikalische Initiatoren zur Polymerisation enthalten, insbesondere thermisch zerfallende radikalbildende Azo-oder Peroxoinitiatoren. Prinzipiell eignen sich jedoch alle für Acrylate und/oder Methacrylate dem Fachmann geläufigen üblichen Initiatoren. Die Produktion von C-zentrierten Radikalen ist im Houben-Weyl, Methoden der Organischen Chemie, Vol. E 19a, Seiten 60 bis 147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azobisiisobutyronitril, Cyclohexylsulfonylacetylperoxid, Diisopropylpercarbonat, *tert*-Butylperoktoat, Benzpinacol. Besonders bevorzugt werden als radikalische Initiatoren 2,2'-Azobis(2-methylbutyronitril) (Vazo® 67 der Firma DuPont), 1,1'-Azobis-(cyclohexancarbonsäurenitril) (Vazo® 88) und Bis(4-tert-butylcyclohexyl)peroxydicarbonat (Perkadox® 16 der Firma AkzoNobel) verwendet.

Die mittleren Molekulargewichte $M_n$ und $M_w$ der bei der radikalischen Polymerisation entstehenden Polyacrylate, die als Acrylat für den Acrylat-basierten Schaumträger (S) verwendet werden können, werden sehr bevorzugt derart gewählt, dass sie in einem Bereich von 20.000 bis 2.000.000 g/mol liegen; bevorzugt werden für die Schichten der Acrylat-basierten Schaumträger (S) Acrylate mit mittleren Molekulargewichten $M_w$ von 200.000 bis 1.200.000 g/mol hergestellt. Die Bestimmung des mittleren Molekulargewichtes erfolgt über Gelpermeationschromatographie (GPC).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether), Ketone (zum Beispiel Aceton, Butanon) und Ether (zum Beispiel Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen sowie Derivaten und Gemischen davon.

Die Polymerisationszeit beträgt - je nach Umsatz und Temperatur - zwischen vier und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Weiterhin ist der Einsatz von Polymerisationsreglern ebenfalls vorteilhaft im Sinne der Erfindung, um somit die Polymerisation kontrolliert durchzuführen und einen Einfluss auf die Molmassenverteilung ausüben zu können.

Hierbei können zur Radikalstabilisierung in günstiger Vorgehensweise Nitroxide eingesetzt werden, wie zum Beispiel 2,2,5,5-Tetramethyl-1-pyrrolidinyloxyl (PROXYL), 2,2,6,6-Tetramethyl-1-piperidinyloxyl (TEMPO), Derivate des

PROXYLs oder des TEMPOs und weitere dem Fachmann geläufige Nitroxide.

Eine Reihe weiterer Polymerisationsmethoden, nach denen sich die Acrylate, die für die Schicht des Acrylat-basierten Schaumträgers (S) geeignet sind, in alternativer Vorgehensweise herstellen lassen, können aus dem Stand der Technik gewählt werden. So beschreibt WO 96/24620 A1 ein Polymerisationsverfahren, bei dem sehr spezielle Radikalverbindungen wie zum Beispiel phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen.

Als weitere kontrollierte Polymerisationsmethode lässt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) bestimmte MetallKomplexe eingesetzt werden. Die unterschiedlichen Möglichkeiten der ATRP sind ferner in den Schriften der US 5,945,491 A, der US 5,854,364 A und der US 5,789,487 A beschrieben.

Als sehr bevorzugter Herstellprozess wird eine Variante der RAFT-Polymerisation (reversible addition-fragmentation chain transfer polymerization) durchgeführt. Der Polymerisationsprozess ist zum Beispiel in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, Seiten 243 bis 245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige Beispiele zu nennen. Funktionalisierungen können beispielsweise Halogene, Hydroxygruppen, Epoxidgruppen, stickstoff-oder schwefelenthaltende Gruppen sein, ohne dass diese Aufzählung Anspruch auf Vollständigkeit erhebt.

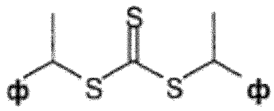

(TTC 1)

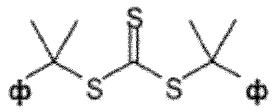

(TTC 2)

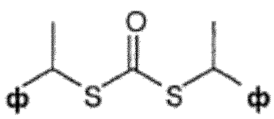

(THI 1)

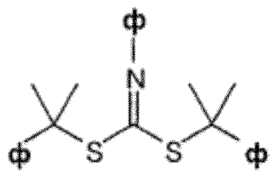

(THI 2)

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere die schon zuvor aufgezählten thermisch zerfallenden radikalbildenden Azo-oder Peroxoinitiatoren. Prinzipiell eignen sich hierfür jedoch alle für Acrylate und/oder Methacrylate bekannten üblichen Initiatoren. Weiterhin können auch Radikalquellen verwendet werden, die erst unter UV-Bestrahlung Radikale freisetzen.

Es kann den durch die beschriebenen Verfahren erhältlichen Polyacrylaten, die bevorzugt zur Bildung des Acrylat-basierten Schaumträgers (S) verwendet werden, zumindest ein klebrigmachendes Harz beigemischt werden. Gemäß einer vorteilhaften Ausführungsform der Erfindung beträgt der Anteil an Harzen, bezogen auf die Gesamtzusammensetzung, zwischen 0 und 40 Gew.-%, vorteilhafterweise zwischen 20 bis 35 Gew.-%. Als zuzusetzende klebrigmachende Harze sind die vorbekannten und in der Literatur beschriebenen Klebharze einsetzbar.
Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich α-Pinen, β-Pinen, δ-Limonen-, Inden- und Kolophoniumharze einsetzen, deren disproportionierte, hydrierte, polymerisierte, veresterte Derivate und Salze, Terpenharze und Terpenphenolharze sowie $C_5$-, $C_5/C_9$-, $C_9$- und andere Kohlenwasserstoffharze. Auch Kombinationen dieser und weiterer Harze können vorteilhaft eingesetzt werden, um die Eigenschaften der resultierenden Schicht des Acrylat-basierten Schaumträgers (S) wunschgemäß einzustellen. Besonders bevorzugt lassen sich alle mit dem entsprechenden Polyacrylat des Acrylat-basierten

Schaumträgers (S) kompatiblen (löslichen) Harze einsetzen. In einer besonders bevorzugten Vorgehensweise werden Terpenphenolharze und/oder Kolophoniumester hinzugesetzt. Vorgenannte Klebharze können sowohl allein als auch im Gemisch eingesetzt werden.

Optional können auch Additive wie pulver- und granulatförmige Füllstoffe, Farbstoffe und Pigmente, besonders auch abrasive und verstärkende, wie zum Beispiel Aerosile (pyrogene Kieselsäuren), Kreiden ($CaCO_3$), Titandioxide, Zinkoxide und Ruße verwendet und gerade im Falle der Schmelzeverarbeitung auch zu hohen Anteilen von 0,5 bis 50 Gew.-%, bezogen auf die Gesamtrezeptur der zu dem Acrylat-basierten Schaumträger (S) führenden Zusammensetzung, eingesetzt werden. Sehr bevorzugt können Aerosile und verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) geeigneter Acrylate durch den Füllstoffzusatz praktisch nicht.

Weiterhin können, gerade im Falle der Substanzpolymerisation und der weiteren Verarbeitung aus der Polymerschmelze, schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten beziehungsweise syntaktischer Schäume, wie beispielsweise Blähmittel, Glasvollkugeln, Glashohlkugeln, carbonisierte Mikrokugeln, phenolische Mikrohohlkugeln, Mikrokugeln aus anderen Materialien, expandierbare Mikroballons (im folgenden auch "expandierbare Mikrokunststoffkugeln") (beispielsweise vom Typ Expancel® der Firma AkzoNobel), Kieselsäure, Silicate, organisch nachwachsende Rohstoffe, beispielsweise Holzmehl, organische und/oder anorganische Nanopartikel, Fasern), weiterhin Alterungsschutzmittel, Lichtschutzmittel, Ozonschutzmittel, Compoundierungsmittel und/oder Blähmittel zugegeben oder eincompoundiert werden. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, auch in Kombination miteinander eingesetzt werden. Hier soll nur an dieser Stelle auf weitere entsprechenden Irganox® Typen der Firma BASF beziehungsweise Hostanox® der Firma Clariant verwiesen werden. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden.

In einer besonders bevorzugten Ausführungsform der Erfindung ist die Schicht des Schaumträgers (S) durch Verwendung von Mikroballons geschäumt. Bei solchen Mikroballons, auch expandierbare Mikrokunststoffkugeln genannt, handelt es sich um elastische Hohlkugeln, die eine thermoplastische Polymerhülle aufweisen; sie werden daher auch als expandierbare polymere Mikrosphären bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung - insbesondere durch Wärmezufuhr oder -erzeugung, beispielsweise durch Ultraschall oder Mikrowellenstrahlung -, erweicht einerseits die äußere Polymerhülle. Gleichzeitig geht das in der Hülle befindliche flüssige Treibgas in seinen gasförmigen Zustand über. Bei einer bestimmten Paarung von Druck und Temperatur dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossen-zelligen Schaum. In einer bevorzugten Ausführungsform der Erfindung wird zur Herstellung des Acrylat-basierten Schaumträgers (S) vor der Expansion das die Schicht des Schaumträgers bildende Acrylat mit expandierbaren Mikrokunststoffkügelchen gemischt.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 $\mu$m Durchmesser im unexpandierten Zustand) und ihre zur Expansion benötigten Starttemperatur (75 °C bis 220 °C) differenzieren.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylen-Vinylacetat mit einer Mikroballonkonzentration von ca. 65 Gew.-%. Weiterhin sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung entsprechend der vorteilhaften Weiterbildung der Erfindung geeignet.

Durch ihre flexible, thermoplastische Polymerschale besitzen die mit Mikroballons hergestellten Schäume eine höhere Spaltüberbrückungsfähigkeit als solche, die mit nicht expandierbaren, nicht polymeren Mikrohohlkugeln (wie Glas- oder Keramikhohlkugeln) gefüllt sind. Darum eignen sie sich besser zum Ausgleich von Fertigungstoleranzen. Ferner kann ein solcher Schaum thermische Spannungen besser kompensieren.

In einer Ausführungsform der Erfindung kann im Anschluss an die Polymerisation das Acrylat, das den Acrylat-basierten Schaumträger bildet, auch mit anderen Polymeren geblendet beziehungsweise abgemischt werden. Hierzu eignen sich Polymere auf Basis von Naturkautschuk, Synthesekautschuk, Vinylaromatenblockcopolymer, zum Beispiel Styrolblockcopolymere, EVA, Siliconkautschuk, Acrylkautschuk, Polyvinylether. Die Herstellung der Polymerblends erfolgt entweder in Lösung oder erfolgt in einem Extruder, bevorzugt in einem Mehrwellenextruder oder in einem Planetwalzenmischer in der Schmelze. Im Falle eines Polymerblends beträgt der Anteil des den Acrylat-basierten Schaumträger (S) bildenden Acrylats bevorzugt mindestens 50 Gew.-%, besonders bevorzugt mindestens 55 Gew.-%, bezogen auf das Gesamtgewicht aller Bestandteile des Schaumträgers (S). So wird sichergestellt, dass die Polymerzusammensetzung (P) eine ausreichende Haftung auf der Schicht des Acrylat-basierten Schaumträgers aufweist und eine zufriedenstellende Chemikalienbeständigkeit des Trägers gewährleistet wird.

Optional können dem Acrylat, das die Schicht des Acrylat-basierten Schaumträgers (S) bildet, d.h. dem den Acrylat-basierten Schaumträger (S) bildenden Acrylat, die üblichen Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate eingesetzt werden.

Bevorzugt wird die innere Festigkeit (Kohäsion) des Acrylat-basierten Schaumträger, bevorzugt des viskoelastischen Polyacrylat-Schaumträgers durch eine Vernetzung gesteigert. Hierzu können den zuvor beschriebenen Acrylat-haltigen Massen optional verträgliche Vernetzersubstanzen zugesetzt werden. Als Vernetzer des die Schicht des Acrylat-basierten Schaumträgers (S) bildenden Acrylats eignen sich zum Beispiel Metallchelate, multifunktionelle Isocyanate, multifunktionelle Amine, multifunktionelle Epoxide, multifunktionelle Aziridine, multifunktionelle Oxazoline multifunktionelle Carbodiimide oder multifunktionelle Alkohole, die mit in dem Acrylat enthaltenen und reaktiven Funktionalitäten reagieren. Auch multifunktionelle Acrylate lassen sich vorteilhaft als Vernetzer für eine actinische Bestrahlung verwenden.

Die wenigstens eine Schicht des Acrylat-basierten Schaumträgers (S) des erfindungsgemäßen mehrschichtigen Produktes hat bevorzugt eine Schichtdicke von mindestens 0,3 mm, besonders bevorzugt von mindestens 0,5 mm. Ein typischer Schichtdickenbereich für solch eine Schaumschicht liegt zwischen 0,3 mm bis zu 5 mm, bevorzugt von 0,5 mm bis zu 2 mm, noch bevorzugter zwischen 0,5 mm und 1,2 mm. Die Schicht des Acrylat-basierten Schaumträgers (S) weist eine zellulare Membranstruktur, bevorzugt eine geschlossenzellige Membranstruktur, besonders bevorzugt eine syntaktische Schaumstruktur auf, in der 15 bis 85 % des Volumens durch Hohlräume eingenommen werden.

Die wenigstens eine Schicht des Acrylat-basierten Schaumträgers (S) der erfindungsgemäßen mehrschichtigen Produkte kommt auch ohne Klebharze (K), Additive (Ad), zu denen auch die erwähnten Füllstoffe gezählt werden, Weichmacher (W) oder zusätzliche Polymere (P) aus, des Weiteren auch ohne K+Ad, K+W, K+P, Ad+W und die anderen permutativ möglichen Zweierkombinationen, des Weiteren auch ohne K+Ad+W, K+Ad+P und die anderen permutativ möglichen Dreierkombinationen oder ohne K+Ad+W+P.

*Weitere Verfahrensdurchführung zur Herstellung der Schicht des Acrylat-basierten Schaumträgers (S)*

Die Herstellung der wenigstens einen Schicht des Acrylat-basierten Schaumträgers (S) des erfindungsgemäßen mehrschichtigen Produktes kann aus Lösung oder lösungsmittelfrei aus der Schmelze erfolgen. Besonders bevorzugt ist die Verarbeitung aus der Schmelze, da aufgrund des fehlenden Trocknungsschrittes sich Schäume mit besonders dicken Schichten herstellen lassen. Zur Schäumung des die Schicht des Acrylat-basierten Schaumträgers (S) bildenden Acrylats kommen übliche Techniken in Frage. Wie zuvor beschrieben, ist eine thermische Vernetzung des viskoelastischen Schaumes wünschenswert, da somit im Gegensatz zur photochemischen Vernetzung oder zur Elektronenstrahlhärtung ein Vernetzungsgradient vermieden werden kann. Die thermische Vernetzung kann insbesondere vorteilhaft entsprechend den in den EP 0 752 435 A1 sowie EP 1 978 069 A1 genannten thermischen Vernetzungsverfahren von Polyacrylatschmelzen durchgeführt werden, welche daher explizit in den Offenbarungsgehalt der vorliegenden Schrift eingeschlossen werden. Die Erfindung ist jedoch nicht darauf beschränkt. Weiterhin können alle dem Fachmann geläufigen Vernetzungsverfahren eingesetzt werden. Vor diesem Hintergrund wird im Sinne der vorliegenden Erfindung bevorzugt auf Schäumungstechniken zurückgegriffen, die einer Vernetzung des die Schicht des Acrylat-basierten Schaumträgers bildenden Acrylats nicht im Wege stehen.

Weiterhin ist die Verarbeitung aus der Schmelze besonders bevorzugt, da somit der Schäumungsprozess gezielt gesteuert werden kann, wodurch die Zellstruktur sowie die Dichte des Schaumträgers sich optimal einstellen lassen. Der Schäumungsprozess kann insbesondere vorteilhaft entsprechend der WO 2010/112346 A1 durchgeführt werden, welche daher explizit in den Offenbarungsgehalt der vorliegenden Schrift eingeschlossen wird. Die Erfindung ist jedoch nicht darauf beschränkt.

Eine weitere sehr vorteilhafte Ausführungsform des Schäumungsprozesses der vorliegenden Erfindung ist die Verwendung expandierbarer Mikrokunststoffkugeln und die gezielte Unterdrückung der Schäumung im Extrusionsprozess, welche erst nach Verlassen einer Düse durch den dadurch erzeugten Druckverlust erfolgt.

Das Verfahren zur Unterdrückung der Schäumung durch Expansion solch expandierbarer Mikrokunststoffkugeln im Extrusionsprozess wird bevorzugt wie folgt durchgeführt (vergleiche Figuren 1 und 2). Das die Schicht des Acrylat-basierten Schaumträgers (S) bildende Acrylat wird aufgeschmolzen und - insbesondere mittels eines Förderaggregates 1 - zu einem Mischaggregat 2 gefördert. In diesem und gegebenenfalls in einem oder mehreren weiteren Mischaggregaten 3 (als Mischaggregate 2, 3 eignen sich insbesondere Extruder wie Doppelschneckenextruder und/oder Planetwalzenextruder) werden an bestimmten Dosierstellen 22, 23, 34, 35, 36 weitere erforderliche und gegebenenfalls optionale Komponenten zugemischt wie Harze, Beschleuniger, Vernetzer, Füllstoffe und dergleichen und auch die Mikroballons. Falls erforderlich, ist zumindest eines der Mischaggregate 2, 3 oder ein weiteres optional vorgesehenes Aggregat (in den Figuren nicht dargestellt) geeignet, die Polymerschmelze zu entgasen. Auf diese Entgasungseinheit kann verzichtet werden, insbesondere wenn alle Mischungsbestandteile vor der Zugabe bereits entgast wurden und das erneute Eindringen von Gasen vermieden wurde. Vorteilhaft findet ein Vakuumdom V zur Erzeugung des Unterdruckes, der die Entgasung bewirkt, Anwendung. Die Zugabe der Mikroballons findet insbesondere bei erhöhtem Druck statt, um bei der Temperatur der Polymerschmelze ein zu frühes Expandieren der Mikrohohlkugeln zu unterdrücken.

Die derart hergestellte Schmelzmischung wird in eine Düse 5 überführt. Bei Verlassen der Düse 5 findet ein Druckabfall statt, so dass die Mikrohohlkugeln nach deren Verlassen, also nach dem Druckabfall, expandieren und für eine Schäumung der Polymermasse sorgen. Die derart geschäumte Masse wird anschließend ausgeformt, insbesondere durch ein Walzwerk 4, wie einem Walzenkalander.

Das Verfahren wird nachfolgend anhand zweier Figuren näher erläutert, ohne sich durch diese beispielhafte Darstellung in der erfindungsgemäßen Lehre unnötig beschränken zu wollen. Es zeigt

Fig. 1 einen für die Verfahrensdurchführung besonders zweckmäßigen Vorrichtungsaufbau

und

Fig. 2 überlagert dem zuvor behandelten Vorrichtungsaufbau beispielhaft eine örtliche Zuordnung der einzelnen Verfahrensschritte und dazu insbesondere die Parameter Temperatur und Druck.

Die Anordnung der Aggregate und Verfahrensapparaturbestandteile, insbesondere der Mischaggregate, ist beispielhaft dargestellt und kann je nach Verfahrensführung variiert werden.

<u>Figur 1</u>

In einem ersten Aggregat 1, beispielsweise in einem Förderaggregat wie einem Extruder (insbesondere einem Einschneckenförderextruder), wird das die Schicht des Acrylat-basierten Schaumträgers (S) bildende Polymer aufgeschmolzen und insbesondere mittels dieses Förderaggregats 1 als Polymerschmelze über ein insbesondere beheizbares Verbindungsstück 11 (zum Beispiel einen Schlauch oder ein Rohr) in ein zweites Aggregat 2, insbesondere ein Mischaggregat wie einen Doppelschneckenextruder, gefördert.

Über eine oder mehrere Dosierstellen 22, 23 in dem zweiten Aggregat können gemeinsam oder getrennt voneinander Additive zu der Basispolymerschmelze gegeben werden, wie beispielsweise alle Harze oder ein Teil der Harze, das Vernetzersystem oder Teile hiervon (insbesondere Vernetzer und/oder Beschleuniger), Füllstoffe, Farbpasten oder dergleichen.

Vor Verlassen des Aggregats 2, also insbesondere des Doppelschneckenextruders, wird die so abgemischte Polymerschmelze entgast, insbesondere über einen Vakuumdom V bei einem Druck von 175 mbar oder weniger, und anschließend über ein zweites insbesondere beheizbares Verbindungsstück 24 (zum Beispiel einen Schlauch oder ein Rohr) in ein drittes Aggregat 3 gefördert, insbesondere ein zweites Mischaggregat, zum Beispiel einen mit einem Gleitdichtring 36 versehenen Planetwalzenextruder, gefördert. Das dritte Aggregat 3, insbesondere der Planetwalzenextruder, verfügt über eine oder mehrere temperierbare Mischzonen 31, 32 und über eine oder mehrere Einspritzbeziehungsweise Dosiermöglichkeiten 33, 34, 35, um die Polymerschmelze einzugeben und mit weiteren - insbesondere bereits entgasten - Komponenten und/oder Additiven abzumischen.

Über eine Dosierstelle 34 wird beispielsweise ein Harz oder eine Harzmischung zugesetzt. Vorteilhaft wurde das Harz beziehungsweise die Harzmischung zuvor in einem separaten Vakuumdom V entgast. Über eine Dosierstelle 35 (hier nur schematisch an derselben Stelle wie 34 eingezeichnet, es kann sich - und wird sich in der Regel - aber durchaus um eine andere, an anderer Stelle des Extruders gelegene Dosierstelle handeln) werden die in eine Flüssigkeit eingebetteten Mikroballons zugegeben. Über dieselbe oder eine weitere, in Figur 1 nicht dargestellte Dosierstelle können das Vernetzersystem oder Teile hiervon (insbesondere noch fehlende Komponenten des Vernetzersystems) zugesetzt werden. Vorteilhaft können das Vernetzersystem oder Teile hiervon - insbesondere Vernetzer und/oder Beschleuniger - gemeinsam mit den Mikroballons als Mikroballon-Vernetzersystem-Mischung zugemischt werden. In einer Heizzone 32 (beheizbare Mischzone) wird die Polymerschmelze mit den zugesetzten Komponenten und/oder Additiven, jedenfalls den Mikroballons, compoundiert.

Die derart entstandene Schmelzmischung wird über ein weiteres Verbindungsstück oder eine weitere Fördereinheit 37, wie zum Beispiel eine Zahnradpumpe, in eine Düse 5 überführt. Nach Verlassen der Düse 5, also nach Druckabfall, expandieren die eingearbeiteten Mikroballons, so dass eine geschäumte Polymermasse, insbesondere eine geschäumte Selbstklebemasse, entsteht, welche anschließend ausgeformt wird, zum Beispiel mittels eines Walzenkalanders 4 bahnförmig ausgeformt wird (Walzen 41, 42, 43 des Kalanders, Trägermaterial 44, auf das die Polymerschicht aufgelegt wird).

Figur 2

Das Acrylat, das die Schicht des Acrylat-basierten Schaumträgers (S) bildet, wird in einem ersten Aggregat 1, beispielsweise in einem Förderaggregat wie einem Extruder (insbesondere einem Einschneckenförderextruder), aufgeschmolzen und mit diesem als Polymerschmelze über einen beheizbaren Schlauch 11 oder einem ähnlichen Verbindungsstück (zum Beispiel einem Rohr) in ein zweites Aggregat 2, zum Beispiel ein Mischaggregat wie ein Planetwalzenextruder, gefördert. In Figur 2 ist hierfür beispielhaft ein modular aufgebauter Planetwalzenextruder mit vier Modulen, die unabhängig voneinander temperiert werden können vorgesehen ($T_1$, $T_2$, $T_3$, $T_4$).

Über die Dosieröffnung 22 können weitere Komponenten zugegeben werden, hier insbesondere ein geschmolzenes Harz oder eine geschmolzene Harzmischung (zur besseren Vermischbarkeit kann es vorteilhaft sein, im Segment $T_2$, bevorzugt auch im Segment $T_1$ eine hohe Temperatur zu wählen). Ebenso besteht die Möglichkeit, zusätzliche Additive oder Füllstoffe, wie zum Beispiel Farbpasten, über weitere vorhandene Dosierstellen wie 22 im Aggregat 2 zuzuführen (nicht separat eingezeichnet). An der Dosierstelle 23 kann vorteilhaft der Vernetzer hinzugefügt werden. Hierzu ist es vorteilhaft, die Temperatur der Schmelze abzusenken, um die Reaktivität des Vernetzers zu senken und hierdurch die Verarbeitungszeit zu erhöhen (Temperatur im Segment $T_4$ niedrig, vorteilhaft auch im Segment $T_3$ niedrig).

Mittels eines beheizbaren Schlauches 24b oder eines ähnlichen Verbindungsstücks und einer Schmelzepumpe 24a oder einer anderen Fördereinheit wird die Polymerschmelze in ein drittes Aggregat 3, beispielsweise ein weiteres Mischaggregat wie ein Doppelschneckenextruder, überführt und an Position 33 in dieses Aggregat 3 eingespeist. An der Dosierstelle 34 wird beispielsweise die Beschleunigerkomponente hinzugefügt. Der Doppelschneckenextruder ist vorteilhaft derart ausgelegt, dass er als Entgasungsvorrichtung eingesetzt werden kann. So kann beispielsweise an der dargestellten Stelle die gesamte Mischung in einem Vakuumdom V bei einem Druck von 175 mbar oder weniger von allen Gaseinschlüssen befreit werden. Im Anschluss an die Vakuumzone befindet sich auf der Schnecke ein Blister B (eine insbesondere als umlaufender Spalt, beispielsweise als Ringspalt, ausgebildete Drosselstelle im Extrusionsraum, die insbesondere zur Einstellung des Drucks der im Extruder verarbeiteten Schmelze dient), welcher einen Druckaufbau in dem darauf folgenden Segment S ermöglicht. Durch geeignete Steuerung der Extruderdrehzahl und der dem Extruder nachgeschalteten Fördereinheit, beispielsweise einer Schmelzepumpe 37a, wird in dem Segment S zwischen Blister B und Schmelzepumpe 37a ein Druck von 8 bar oder größer aufgebaut. In diesem Segment S wird an einer Dosierstelle 35 die Mikroballonmischung (Mikroballons eingebettet in eine Flüssigkeit) eingegeben und im Extruder homogen in die Polymermasse eingearbeitet.

Die derart entstandene Schmelzmischung wird mittels der Fördereinheit (Schmelzepumpe 37a und ein Verbindungsstück 37b, zum Beispiel ein Schlauch) in eine Düse 5 überführt. Nach Verlassen der Düse 5, also nach Druckabfall, expandieren die eingearbeiteten Mikroballons, so dass eine geschäumte Polymermasse, insbesondere eine geschäumte Trägerschicht S entsteht, welche anschließend ausgeformt wird, zum Beispiel mittels eines Walzenkalanders 4 bahnförmig ausgeformt wird.

Weiterhin können alle dem Fachmann geläufigen chemischen und physikalischen Schäumungsverfahren zur Überführung des die Schicht des Acrylat-basierten Schaumträgers (S) bildenden Acrylats in einen Schaum verwendet werden. Dabei ist jedoch darauf zu achten, dass das die Schicht des Acrylat-basierten Schaumträgers (S) bildende Acrylat, sofern erforderlich, thermisch vernetzbar bleibt.

In einem weiteren Aspekt betrifft die vorliegende Erfindung ein Verfahren zur Herstellung der erfindungsgemäßen mehrschichtigen Produkte, umfassend das

(i) Bereitstellen der hierin beschriebenen Schicht des Acrylat-basierten Schaumträgers (S) mit einer Oberseite und einer Unterseite; und das
(ii) Aufbringen der hierin beschriebenen mehrphasigen Polymerzusammensetzung (P) auf die Oberseite und/oder die Unterseite des Schaumträgers (S).

Schritt (i) des erfindungsgemäßen Verfahrens umfasst dabei bevorzugt die folgenden Verfahrensschritte:

(a) das Bereitstellen eines oder mehrerer Acrylate und Alkylacrylate, die mittels freier oder kontrollierter radikalischer Polymerisation polymerisierbar sind;
(b) das Polymerisieren der in Verfahrensschritt (a) bereitgestellten Acrylate und Alkylacrylate unter Bildung des

hierin beschriebenen Polyacrylates; und

(c) das Überführen des erhaltenen Polyacrylates in den hierin beschriebenen Polyacrylat-Schaum, bevorzugt das Schäumen des erhaltenen Polyacrylates unter Ausbildung des Polyacrylat-Schaums, besonders bevorzugt das Vernetzen und Schäumen oder das Schäumen und Vernetzen des Polyacrylates unter Ausbildung eines vernetzten Polyacrylat-Schaums; und

(d) Formen des Polyacrylat-Schaums zu einer Schicht des hierin beschriebenen Schaumträgers (S).

Aufgrund der hierin beschriebenen Eignung der mehrphasigen Polymerzusammensetzung (P) zur Verklebung von Gegenständen, insbesondere zur Verklebung von Gegenständen mit Oberflächen niedriger Energie, betrifft die vorliegende Erfindung ferner ein Klebeband, umfassend das erfindungsgemäße mehrschichtige Produkt, sowie die Verwendung des mehrschichtigen Produktes zur Verklebung von Gegenständen, insbesondere zur Verklebung von Oberflächen mit niedriger Energie.

Die erfindungsgemäßen mehrschichtigen Produkte sind besonders zur Verklebung unterschiedlicher Materialien und Komponenten wie Emblemen, Kunststoffkörperformteilen (z.B. Stoßdämpfern) und Gummidichtungen auf der Karosserie von Kraftfahrzeugen geeignet. Die Verklebung ist dabei insbesondere auch erst nach einem Lackierungsschritt der Karosserie mit einem LSE-Lack möglich, wodurch die Oberfläche der Karosserie die Eigenschaften von Materialien mit niedriger Energie aufweist.

Im Folgenden wird die Erfindung anhand konkreter Beispiele näher erläutert.

## Beispiele

Messmethoden (allgemein):

K-Wert (nach FIKENTSCHER) (Messmethode A1):

Der K-Wert ist ein Maß für die durchschnittliche Molekülgröße hochpolymerer Stoffe. Zur Messung wurden einprozentige (1g/100 mL) toluolische Polymerlösungen hergestellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach Fikentscher der K-Wert errechnen lässt (Polymer 1967, 8, 381 ff.)

Gelpermeationschromatographie GPC (Messmethode A2):

Die Angaben des gewichtsmittleren Molekulargewichtes $M_w$ und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

Feststoffgehalt (Messmethode A3):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Statische Glasübergangstemperatur Tg (Messmethode A4)

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

Dichtebestimmung mittels Pyknometer (Messmethode A5a)

Das Messprinzip beruht auf der Verdrängung der im Pyknometer befindlichen Flüssigkeit. Dabei wird erst das leere bzw. das mit Flüssigkeit gefüllte Pyknometer gewogen und dann der zu vermessende Körper in das Gefäß gegeben. Aus den Gewichtsunterschieden berechnet sich die Dichte des Körpers:

Es sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_W$ die Dichte des Wassers bei der entsprechenden Temperatur,
- $\rho_F$ die Dichte des Festkörpers.

Dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt. Es ist zu beachten, dass bei diesem Verfahren die Rohdichte (bei porösen Festkörpern, vorliegend einem Schaum, die Dichte basierend auf dem Volumen einschließlich der Porenräume) erhalten wird.

Schnellverfahren Dichtebestimmung über den Masseauftrag und die Schichtdicke (Messmethode A5b)

Das Raumgewicht beziehungsweise die Dichte $\rho$ der aufgetragenen Schicht wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2]\cdot[m]} = \left[\frac{kg}{m^3}\right]$$

MA = Masseauftrag/Flächengewicht (ohne Linergewicht) in [kg/$m^2$]
d = Schichtdicke (ohne Linerdicke) in [m]

Auch bei diesem Verfahren wird die Rohdichte erhalten.
Diese Dichtebestimmung eignet sich insbesondere zur Bestimmung der Gesamtdichte fertiger, auch mehrschichtiger, Produkte.

Messmethoden (insbesondere Haftklebemassen):

180°Klebkrafttest (Messmethode H1):

Ein 20 mm breiter Streifen einer auf Polyester als Schicht aufgetragenen Acrylathaftklebemasse wurde auf einer Stahlplatte aufgebracht, die zuvor zweimal mit Aceton und einmal mit Isopropanol gereinigt wurde. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen. Analog wurde die Klebkraft auf Polyethylen (PE) und Lack bestimmt. Als Lack wurde - auch für Beispiele gemessen nach Messmethode H2 - jeweils der Lack Uregloss® Colorless (Produkt-Nr. FF79-0060 0900) der Fa. BASF verwendet.

90° Klebkraft Stahl-offene und abgedeckte Seite (Messmethode H2):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton gereinigt und danach 5 Minuten an der Luft gelassen, damit das Lösungsmittel abdampfen kann. Die dem Prüfuntergrund abgewandte Seite des Dreischichtverbundes wurde dann mit einer 50 µm Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle fünfmal hin und her, bei einer Aufrollgeschwindigkeit von 10 m/min, überrollt.

Unmittelbar nach dem Anrollen wurde die Stahlplatte in eine spezielle Halterung geschoben, die es ermöglicht, das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 μm Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit (Haftklebemasse auf PET-Folie, Messmethode H3):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Scherstandzeit - offene und abgedeckte Seite (Klebebandartikel, Messmethode H4):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm · 13 mm (Länge · Breite). Vor der Messung wurde die Stahlplatte gereinigt und konditioniert. Dazu wird die Platte zunächst mit Aceton gereinigt und danach 5 Minuten an der Luft liegen gelassen, damit das Lösungsmittel abdampfen kann. Nach dem Verkleben wurde die offene Seite mit einer 50 μm Aluminiumfolie verstärkt und mit einer 2 kg Rolle zweimal hin und her überrollt. Anschließend wurde eine Gurtschlaufe am überstehenden Ende des Dreischichtverbundes angebracht. Die Probe wurde dann an einer geeigneten Vorrichtung aufgehängt und mit 10 N belastet. Die Aufhängvorrichtung ist so beschaffen, dass das Gewicht die Probe in einem Winkel von 179 ° +/- 1 ° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 μm Aluminiumfolie verstärkt, das Trennmaterial entfernt und auf die Prüfplatte analog der Beschreibung der offenen Seite geklebt. Die Messung wird bei Normalklima (23 °C, 55 % Luftfeuchtigkeit) durchgeführt.

Dynamische Scherfestigkeit (Messmethode H5):

Ein quadratisches Transferklebeband mit einer Kantenlänge von 25 mm wird zwischen zwei Stahlplatten verklebt und 1 Minute lang mit 0,9 kN angedrückt (Kraft P). Nach einer Lagerung von 24 h wird der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen werden. Die Maximalkraft wird in $N/cm^2$ ermittelt.

Chemikalienbeständigkeit insbesondere gegenüber Benzin 60/95, Motoröl und Dieselkraftstoff (Messmethode H6):

Die Probenvorbereitung und Messung erfolgt gemäß der Messmethode H1. Das schon verklebte Muster wird in das jeweils zu untersuchende und auf 23 °C temperierte Lösungsmittel für 10 min eingelegt. Anschließend wird das Muster aus dem Lösungsmittelbad genommen und abgewischt, und das restliche Lösungsmittel wird innerhalb von 10 min abgedampft bevor eine Klebkraftmessung im Vergleich zu einer Probe des gleichen Klebebandes, welche die gleiche Kontaktzeit zum Substrat hatte aber nicht in einem Lösungsmittel aufbewahrt wurde, durchgeführt.

Die folgende Tabelle enthält die in den hier beschriebenen Beispielen eingesetzten, kommerziell erhältlichen Chemikalien.

| *Chemische Verbindung* | *Handelsname* | *Hersteller* | *CAS-Nr.* |
|---|---|---|---|
| 1,3-Butadien, Homopolymer, hydriert, hydroxy-terminiert, Monomethacrylat | L-1253 | Kuraray | 260057-97-4 |
| Isostearylacrylat | ISTA | ISA Co., Ltd. | 93841-48-6 |
| 2,2'-Azobis(2-methylbutyronitril) | Vazo® 67 | DuPont | 13472-08-7 |
| Bis-(4-*tert*-butylcyclohexyl)peroxydicarbonat | Perkadox® 16 | Akzo Nobel | 15520-11-3 |
| Aluminium acetylacetonat | - | Sigma-Aldrich | 13963-57-0 |
| flüssiges Kohlenwasserstoffharz ($C_5$-Basis) | Wingtack® 10 | Cray Valley | 26813-14-9 |
| Kohlenwasserstoffharz (auf $C_5$-Basis, geringer Aromatenanteil, Erweichungspunkt (Ring & Ball) 94°C) | Piccotac® 1095-N | Eastman | - |
| Hydriertes flüssiges Polyisopren | LIR-290 | Kuraray | 151789-04-7 |
| SBS (ca. 16 Gew.-% Zweiblock, Blockpolystyrolgehalt: 31 Gew.-%) | Kraton® D 1101 | Kraton Polymers | 9003-55-8 |
| SBS (ca. 76 Gew.-% Zweiblock, Blockpolystyrolgehalt: 31 Gew.-%) | Kraton® D 1118 E | Kraton Polymers | 9003-55-8 |
| Kohlenwasserstoffharz (auf $C_5$- und $C_9$-Basis mit geringem Aromatenanteil, Erweichungspunkt (Ring & Ball) ca. 95°C) | Escorez™ 2203 | Exxon Mobil | 64742-16-1 |
| naphthenisches Öl | Shellflex® 371 | Shell | 64742-2-5 |
| 2,2'-Azobis(isobutyronitril) (AIBN) | Vazo® 64 | DuPont | 78-67-1 |
| 3,4-Epoxycyclohexylmethyl-3,4-epoxycyclohexan carboxylat | Uvacure® 1500 | Cytec Industries Inc. | 2386-87-0 |
| Resorcinol bis(diphenyl Phosphat) | Reofos® RDP | Chemtura | 57583-54-7 |
| Pentaerythrittetraglycidether | Polypox® R16 | UPPC AG | 3126-63-4 |
| *N'*-(3-(Dimethylamino)propyl)-*N,N*-dimethyl-1,3-propandiamin | Jeffcat® Z-130 | Huntsman | 6711-48-4 |
| Mikroballons (MB) (trocken-unexpandierte Mikrosphären, Durchmesser 9 - 15 μm, Expansions-Starttemperatur 106 - 111 °C, TMA-Dichte ≤ 25 kg/m$^3$) | Expancel® 051 DU 40 | Expancel Nobel Industries | |

**I Herstellung der Kammcopolymere (A) - P 1 bis P 4**

Im Folgenden wird die Präparation beispielhafter Kammcopolymere (A) beschrieben.

Beispiel P 1:

Ein für radikalische Polymerisationen konventioneller 100 L-Glasreaktor wurde mit 1,2 kg Acrylsäure (AS, 3 %), 20,97 kg 2-Ethylhexylacrylat (EHA, 52,43 %), 9,83 kg Butylacrylat (BA, 24,57 %), 4,0 kg Isobornylacrylat (IBOA, 10 %), 4,0 kg Makromer L-1253 (10 %) und 20,8 kg Aceton/ Benzin 60/95 (1:1) befüllt. Nach 45minütiger Durchleitung von Stickstoffgas unter Rühren wurde der Reaktor auf 58°C hochgeheizt und 0,8 kg Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,8 kg Vazo® 67 hinzugegeben. Über einen Zeitraum von 5 h (gerechnet ab der letzten Zugabe von Vazo® 67) wurde jeweils stündlich je nach Viskositätsanstieg mit jeweils 5,0 bis 10,0 kg Benzin 60/95 verdünnt, so dass eine ausreichende Durchmischung gewährleistet war. Zur Reduktion der Restmonomere wurden nach 6 und nach 7 h ab Reaktionsstart (also gerechnet ab der ersten Zugabe von Vazo® 67) jeweils 1,5 kg Bis-(4-*tert*-butylcyclohexyl)peroxydicarbonat hinzugegeben und zwischendurch noch mit 15 kg Benzin 60/95 verdünnt. Die Reaktion wurde nach 24 h Reaktionszeit durch Abkühlen auf Raumtemperatur abgebrochen.

Kammcopolymere (A) - P 2 bis P 4

Die Herstellung der Kammcopolymere P 2 bis P 4 erfolgte analog dem Beispiel P 1. Die prozentualen Massenangaben der jeweils verwendeten Monomere sind in Tabelle 1 aufgeführt. Sowohl zur Polymerisation des Hybridpolymers P 3 also auch für alle während der Herstellung von P3 getätigten Verdünnungen wurde Ethylacetat verwendet.

**Tabelle 1:** Hybridpolymere P 2 bis P 4

| | **AS** | **BA** | **EHA** | **IBOA** | **ISTA** | **L-1253** |
|---|---|---|---|---|---|---|
| **P 2** | 3,0 % | 26,9 % | 60,1 % | - | - | 10,0 % |
| **P 3** | 5,0% | 25,5 % | 54,5 % | - | - | 15,0 % |
| **P 4** | 5,0% | 25,5 % | 54,5 % | - | 5,0% | 10,0 % |

In Tabelle 2 sind jeweils die mittels GPC gemessenen Molmassenverteilungen und mittels DSC gemessenen statischen Glasübergangstemperaturen der Hybridpolymere P 1 bis P 4 dargestellt.

**Tabelle 2:** Polymerdaten Hybridpolymere P 1 bis P 4

| | $M_n$ [g/mol][a)] | $M_w$ [g/mol][a)] | PD [-][a)] | stat. $Tg_1$ [°C][b)] | stat. $Tg_2$ [°C][b)] |
|---|---|---|---|---|---|
| **P 1** | 64.800 | 1.570.000 | 24,23 | -67,7 | -39,6 |
| **P 2** | 64.900 | 1.550.000 | 23,88 | -67,7 | -50,5 |
| **P 3** | 68.500 | 1.620.000 | 23,65 | -67,7 | -49,4 |
| **P 4** | 58.100 | 1.620.000 | 27,88 | -53,4 | -49,9 |
| [a)] Gemessen nach Messmethode A2.<br>[b)] Gemessen nach Messmethode A4. | | | | | |

**II Herstellung mehrphasiger Polymerzusammensetzungen (P) - PSA 1 bis PSA 4 sowie Vergleichszusammensetzungen VPSA 5 bis VPSA 7**

Im Folgenden wird die Präparation beispielhafter mehrphasiger Polymerzusammensetzungen (P) beschrieben. Alle Beispiele PSA 1 bis PSA 4 sowie die Vergleichsbeispiele VPSA 5 bis VPSA 7 wurden in Lösung hergestellt, auf eine 36 μm dicke PET-Folie (Kemafoil HPH 100, Fa. Covema) bzw. auf eine silikonisierte Trennfolie zur Kaschierung auf eine Schicht eines Acrylat-basierten Schaumträgers beschichtet und anschließend getrocknet. Der Masseauftrag betrug jeweils 50 g/m$^2$.

Die mehrphasigen Polymerzusammensetzungen PSA 1 bis PSA 4 sowie das Vergleichsbeispiel VPSA 5 basierend auf einem Acrylat-Kohlenwasserstoff-Hybridpolymer wurden in Lösung aus den Hybridpolymeren P 1 bis P 4 hergestellt. Dazu wurde auf einen Feststoffgehalt von 30 % mit Benzin verdünnt, 0,3 Gew.-% des Vernetzers Aluminiumacetylacetonat und das Harz bzw. die Harze gemäß Tabelle 3 zu der Lösung hinzugegeben, beschichtet und anschließend getrocknet. Für Beschichtung und Trocknung wurde eine Apparatur verwendet, bei der sich ein Trockenkanal mit unterschiedlichen Temperaturzonen hinter einem Kommarakel befand (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C).

Die Harzanteile sowie die Glasübergangstemperaturen der Acrylat- und der Kohlenwasserstoffphase der mehrphasigen Polymerzusammensetzung (P) sind in Tabelle 3, die klebtechnischen Daten der Beispiele PSA 1 bis PSA 4 sowie der Vergleichsbeispiele VPSA 5 bis VPSA 7 sind in der Tabelle 4 aufgeführt.

**Tabelle 3**: Hybridhaftklebemassebeispiele PSA 1 bis PSA 4 sowie Vergleichsbeispiel VPSA 5

| | Polymer | Piccotac 1095-N [%] | Wingtack 10 [%] | LIR-290 [%] | Kohlenwasserstoff-anteil gesamt [%] | Kohlenwasserstoff-anteil auf Makromer [%] | Anteil KW-Festharz auf Gesamtharz [%] | stat. Tg KW-Phase [°C][b)] | stat. Tg Ac-Phase [°C][b)] | □Tg [K] |
|---|---|---|---|---|---|---|---|---|---|---|
| **PSA 1** | P1 | 30,0 | 16,0 | 10,0 | 56,0 | 92,7 | 65,2 | 1 | -39,6 | 40,6 |
| **PSA 2** | P2 | 27,9 | 23,2 | - | 51,1 | 91,4 | 54,6 | 6,3 | -50,5 | 56,8 |
| **PSA 3** | P3 | 30,3 | 23,0 | - | 53,3 | 86,9 | 56,8 | 6,4 | -49,4 | 55,8 |
| **PSA 4** | P4 | 30,3 | 23,0 | - | 53,3 | 86,9 | 56,8 | 6,4 | -49,9 | 56,3 |
| **VPSA 5** | P1 | 16,3 | 30,0 | - | 46,3 | 88,4 | 35,2 | -6,0 | -39,9 | 33,9 |

[b)]Gemessen nach Messmethode A4.

Vergleichsbeispiel vernetzte Synthesekautschukhaftklebemasse (VPSA 6):

Für das Vergleichsbeispiel PSA 5 wurden 33,0 kg Kraton D 1101, 17 kg Kraton D 1118, 48,0 kg des Kohlenwasserstoffharzes Escorez 2203 sowie 2,0 kg des Öls Shellflex 371 in 100 kg Toluol gelöst. Die Masse wurde nach dem Ausstreichen (Schichtdicke: 50 g/$m^2$) und Trocknen noch zusätzlich mittels Elektronenstrahlhärtung (ESH) vernetzt. Hierzu wurde zur Elektronenstrahlhärtung eine Anlage der Firma ELECTRON CROSSLINKING AB (Halmstad, Schweden) verwendet und eine Beschleunigerspannung von 220 keV sowie eine Dosis von 35 kGy bei einer Bahngeschwindigkeit von 3 m/min verwendet.

Vergleichsbeispiel Polyacrylathaftkleber (VPSA 7):

Ein für radikalische Polymerisationen konventioneller 100 L-Glasreaktor wurde mit 2,0 kg Acrylsäure, 25,0 kg Butylacrylat, 13,0 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-*tert*-butylcyclohexyl)peroxydicarbonat hinzugegeben. Die Reaktion wurde 24 h nach Reaktionszeit durch Abkühlen auf Raumtemperatur abgebrochen. Das resultierende Polyacrylat hatte einen K-Wert von 49,3, ein mittleres Molekulargewicht von $M_w$ = 1.058.800 g/mol, eine Polydispersität von D ($M_w/M_n$) = 15,1 und eine statische Glasübergangstemperatur von Tg = - 15,3 °C. Anschließend wurde das Polyacrylat mit 0,2 Gew.-% Uvacure 1500 abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/$m^2$.

**Tabelle 4:** Klebtechnische Daten der mehrphasigen Polymerzusammensetzungen (P) - PSA 1 bis PSA 4 sowie Vergleichsbeispiele VPSA 5 bis VPSA 7

| **Bsp.** | KK sofort Stahl [N/cm] | KK sofort FF-79 [N/cm] | KK sofort PE [N/cm] | SSZ RT [min] |
|---|---|---|---|---|
| **PSA 1** | 9,65 | 6,2 | 6,12 | > 10.000 |
| **PSA 2** | 12,79 | 10,52 | 5,89 | > 10.000 |
| **PSA 3** | 15,74 | 15,39 | 7,56 | 7.200 (K) |
| **PSA 4** | 15,36 | 14,99 | 7,87 | 7108 (K) |
| **VPSA 5** | 8,63 | 6,7 | 4,42 | 3.682 (A) |
| **VPAS 6** | 3,8 | 1,2 | 0,5 | > 10.000 |
| **VPSA 7** | 4,4 | 1,3 | 1,0 | > 10.000 |

Die Messungen Klebkraft (KK) sofort erfolgten gemäß Messmethode H1, die Messungen der Scherstandszeiten (SSZ) bei Raumtemperatur erfolgte gemäß Messmethode H3. A: Adhäsionsbruch, K: Kohäsionsbruch.

**III Herstellung beispielhafter Polyacrylate für die Schicht des Acrylat-basierten Schaumträgers (S) - VT 1 und VT 2**

Im Folgenden wird die Präparation der Ausgangspolymere beschrieben. Die untersuchten Polymere werden konventionell über eine freie radikalische Polymerisation in Lösung hergestellt.

Polyacrylat VT 1

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g 2,2'-Azobis-(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 40 g 2,2'-Azobis-(2-methylbutyronitril) zugegeben und nach 4 h wurde mit 10 kg Aceton/Isopropanol-Gemisch (94:6) verdünnt.

Nach 5 sowie nach 7 h wurde jeweils mit 120 g Bis-(4-*tert*-butylcyclohexyl)-peroxydicarbonat nachinitiiert. Nach

22 h Reaktionszeit wurde die auf Raumtemperatur abgekühlt. Das Polyacrylat hat einen K-Wert von 58,8, einen Feststoffgehalt von 55,9 %, ein mittleres Molekulargewicht von $M_w$ = 746.000 g/mol, Polydispersität ($M_w/M_n$) = 8,9 und eine statische Glasübergangstemperatur von Tg = -11,0 °C.

Polyacrylat VT 2

Ein für radikalische Polymerisationen konventioneller Reaktor wurde mit 30 kg 2-Ethylhexylacrylat, 67 kg n-Butylacrylat, 3 kg Acrylsäure und 66 kg Aceton/Isopropanol (96:4) befüllt. Nach 45minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.

Nach 5 sowie nach 7 h wurde jeweils mit 150 g Bis-(4-*tert*-butylcyclohexyl)-peroxydicarbonat nachinitiiert und mit 23 kg Aceton/Isopropanol-Gemisch (96:4) verdünnt. Nach 22 h Reaktionszeit wurde die Polymerisation durch Abkühlen auf Raumtemperatur abgebrochen. Das Polyacrylat hat einen K-Wert von 75,1, einen Feststoffgehalt von 50,2 %, ein mittleres Molekulargewicht von $M_w$ = 1.480.000 g/mol, Polydispersität ($M_w/M_n$) = 16,1 und eine statische Glastemperatur von Tg = -38,5 °C.

**IV Herstellung von Mikroballonmischungen**

Die Mikroballons werden in ein Behältnis gegeben, in welches Reofos® RDP als flüssige Komponente (Dispergiermittel) gemäß der Angabe bei den einzelnen Beispielen vorgelegt wurde. Anschließend wurde in einem Planetenrührwerk der Firma PC-LABORSYSTEM bei einem Druck von 5 mbar und einer Drehzahl von 600 rpm für 30 min gerührt.

**Verfahren 1: Aufkonzentration / Herstellung der Polyacrylatschmelze**

Die Acrylatcopolymere (Basispolymere VT 1 und VT 2) werden mittels Einschneckenextruder (Fütterextruder 1, TROESTER GmbH & Co KG, Deutschland) weitestgehend vom Lösemittel befreit (Restlösemittelgehalt ≤ 0,3 Gew.-%; wie bei den einzelnen Beispielen angegeben). Exemplarisch sind hier die Parameter der Aufkonzentration des Polyacrylats VT 1 dargestellt. Die Drehzahl der Schnecke betrug 150 U/min, der Motorstrom 15 A, es wurde ein Durchsatz von 60,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

**Verfahren 2: Herstellung geschäumte Masse**

Die Schäumung findet in einer Versuchsanlage statt, die der Darstellung in Fig. 2 entspricht.
Das entsprechende Polyacrylat (VT 1 und VT 2) wird gemäß Verfahren 1 in einem Fütterextruder 1 aufgeschmolzen und mit diesem als Polymerschmelze über einen beheizbaren Schlauch 11 in einen Planetwalzenextruder 2 (PWE) der Firma ENTEX (Bochum) gefördert (es wurde insbesondere ein PWE mit vier unabhängig voneinander heizbaren Modulen $T_1$, $T_2$, $T_3$, $T_4$ eingesetzt). Über die Dosieröffnung 22 besteht die Möglichkeit, zusätzliche Additive oder Füllstoffe, wie z.B. Farbpasten, zuzuführen. An Punkt 23 wird der Vernetzer hinzugefügt. Alle Komponenten werden zu einer homogenen Polymerschmelze gemischt.

Mittels einer Schmelzepumpe 24a und eines beheizbaren Schlauches 24b wird die Polymerschmelze in einen Doppelschneckenextruder 3 (Firma BERSTORFF) überführt (Eingabeposition 33). An Position 34 wird die Beschleunigerkomponente hinzugefügt. Anschließend wird die gesamte Mischung in einem Vakuumdom V bei einem Druck von 175 mbar von allen Gaseinschlüssen befreit (Kriterium für Gasfreiheit siehe oben). Im Anschluss an die Vakuumzone befindet sich auf der Schnecke ein Blister B, welcher einen Druckaufbau in dem darauf folgenden Segment S ermöglicht. Durch geeignete Steuerung der Extruderdrehzahl und der Schmelzepumpe 37a wird in dem Segment S zwischen Blister B und Schmelzepumpe 37a ein Druck von größer 8 bar aufgebaut, an der Dosierstelle 35 die Mikroballonmischung (Mikroballons eingebettet in das Dispergierhilfsmittel gemäß der Angaben bei den Versuchsreihen) hinzugefügt und mittels eines Mischelements homogen in die Vormischung eingearbeitet. Die entstandene Schmelzmischung wird in eine Düse 5 überführt.

Nach Verlassen der Düse 5, also nach Druckabfall, expandieren die eingearbeiteten Mikroballons, wobei durch den Druckabfall eine scherungsarme, insbesondere scherungsfreie, Abkühlung der Polymermasse erfolgt. Es entsteht ein Acrylat-basierter Schaum, der zur Ausbildung einer Schicht eines Acrylat-basierten Schaumträgers (S) anschließend zwischen zwei Trennmaterialien, insbesondere zwischen einem Trennmaterial, welches erneut nach dem Entfernen

wiederverwendet werden kann (Prozessliner) beschichtet und mittels eines Walzenkalanders 4 bahnförmig ausgeformt wird.

**Tabelle 5:** Viskoelastische Acrylat-basierte Schaumträger VT 1 und VT 2

| **Beispiel** | | | | **VT 1** | **VT 2** |
|---|---|---|---|---|---|
| **Komponente n** | Polyacrylat<br>Expancel 051 DU 40<br>Polypox R16<br>Jeffcat Z130<br>Reofos RDP | | [w-%] | 97,8<br>1,5<br>0,139<br>0,144<br>0,41 | 97,1<br>2,0<br>0,222<br>0,154<br>0,48 |
| **Aufbau** | Dicke<br>Dichte (I.2) | | [μm]<br>[kg/m³] | 1092<br>749 | 1124<br>670 |
| **Performance** | SSZ<br>[min] | RT 20N<br>70°C 10N | [min] | 1874<br>1282 | 5232<br>2954 |
| | Klebkraft Stahl [N/cm] | sofort<br>3d<br>14d | [N/cm] | 24,5 A<br>33,4 A<br>35,1 A | 21,0 A<br>64,3 K<br>65,2 K |
| Dichte: Messmethode A5a, Klebkraft: Messmethode H2, SSZ (Scherstandszeit): Messmethode H4 | | | | | |

**V Mehrschichtige Produkte MT 1 bis MT 8; Vergleichsbeispiele VMT 9 bis VMT 11**

In allen Beispielen wurde auf beiden Seiten der Acrylat-basierten Schaumträger die gleiche Haftklebemasse beschichtet. Der Masseauftrag der jeweiligen mehrphasigen Polymerzusammensetzung auf dem viskoelastsischen Träger beträgt in allen Fällen 50 g/m².

Um die Verankerung der Haftklebemasse auf der ausgeformten, viskoelastischen Trägerschicht zu verbessern, werden sowohl die Haftklebemasse als auch der viskoelastische Träger vor dem Kaschierschritt mittels Corona behandelt (Corona-Anlage der Firma VITAPHONE, Dänemark, 100 W·min/m²). Diese Behandlung führt nach der Herstellung des Dreischichtverbundes zu einer verbesserten chemischen Anbindung an die viskoelastische Trägerschicht. Die Bahngeschwindigkeit bei Durchlaufen der Kaschieranlage beträgt 30 m/min. Vor dem Kaschieren wird ggf. ein anti-adhäsiver Träger, insbesondere ein Prozessliner ausgedeckt und das fertige Dreischichtprodukt mit einem verbleibenden zweiten anti-adhäsiven Träger aufgewickelt.

Im Folgenden werden konkrete Beispiele der erfindungsgemäßen mehrschichtigen Produkte (MT) sowie nicht-erfindungsgemäßer Vergleichsprodukte (VMT) vorgestellt, ohne dass durch die Wahl der angegebenen Formulierungen, Konfigurationen, Prozessparameter und/oder Produktdesigns die Erfindung unnötig eingeschränkt werden soll.

**Tabelle 6:** Beispiele MT 1 bis MT 8 sowie der Vergleichsbeispiele VMT 9 bis VMT 11

| **Bsp.** | **Haftklebemasse** | **Viskoel. Träger** | **KK Stahl [N/cm]** | **KK PE [N/cm]** | **KK Lack FF-79 [N/cm]** | **SSZ 10 N, RT [min]** | **SSZ 10 N, 70 °C [min]** | **Dyn. Scherfestigkeit [N/cm²]** |
|---|---|---|---|---|---|---|---|---|
| MT 1 | PSA 1 | VT 1 | 50 f.s. | 48 | 50 f.s. | >10.000 | >10.000 | 60 |
| MT 2 | PSA 1 | VT 2 | 50 f.s. | 49 | 50 f.s. | >10.000 | 1.200 | 63 |
| MT 3 | PSA 2 | VT 1 | 50 f.s | 47 | 42 | >10.000 | >10.000 | 44 |
| MT 4 | PSA 2 | VT 2 | 50 f.s. | 48 | 50 f.s. | >10.000 | 5.200 | 54 |
| MT 5 | PSA 3 | VT 1 | 50 f.s. | 48 | 50 f.s. | >10.000 | >10.000 | 65 |
| MT 6 | PSA 3 | VT 2 | 50 f.s. | 50 f.s. | 50 f.s. | >10.000 | >10.000 | 68 |
| MT 7 | PSA 4 | VT 1 | 50 f.s | 42 | 42 | >10.000 | >10.000 | 60 |
| MT 8 | PSA 4 | VT 2 | 50 f.s | 46 | 45 | >10.000 | 2.200 | 44 |
| VMT 9 | VPSA 5 | VT 2 | 50 f.s. | 34 | 44 | >10.000 | 5.500 | 52 |
| VMT 10 | VPSA 6 | VT 2 | 41 | 23 | 41 | 7.500 (A) | 380 (A) | 65 |
| VMT 11 | VPSA 7 | VT 2 | 25 | 10 | 23 | >10.000 | 2.200 | 41 |

Klebkraft: Messmethode H2, SSZ (Scherstandszeit): Messmethode H4, Dynamische Scherfestigkeit: Messmethode H5, A: Adhäsionsbruch
f.s.: foam split (kohäsives Spaltens des viskoelastischen Trägers)

**VI Aufziehverhalten der dreischichtigen Produkte MT 6 sowie der Vergleichsbeispiele VMT 9 bis VMT 11**

**Tabelle 7:** Aufziehverhalten

| Bsp. | KK PE sofort [N/cm] | KK PE 20 min [N/cm] | KK PE 1 d [N/cm] | KK PE 3 d [N/cm] | KK FF-79 sofort [N/cm] | KK FF-79 20 min [N/cm] | KK FF-79 1 d [N/cm] | KK FF-79 3 d [N/cm] |
|---|---|---|---|---|---|---|---|---|
| **MT 6** | 50 f.s. | 50 f.s. | 50 f.s. | 50 f.s. | 50 f.s. | 50 f.s. | 50 f.s. | 50 f.s. |
| **VMT 9** | 34 | 38 | 39 | 39 | 44 | 49 | 50 f.s. | 50 f.s. |
| **VMT 10** | 23 | 30 | 30 | 30 | 41 | 50 f.s. | 50 f.s. | 50 f.s. |
| **VMT 11** | 10 | 18 | 26 | 35 | 23 | 35 | 42 | 79 |

Klebkraft: Messmethode H2, f.s.: foam split (kohäsives Spaltens des viskoelastischen Trägers)

**VII Beständigkeit der dreischichtigen Produkte MT 6 sowie der Vergleichsbeispiele VMT 9 bis VMT 11 gegenüber Benzin 60/95**

**Tabelle 8:** Benzinbeständigkeit

| **Bsp.** | **KK Stahl ohne Benzinlagerung [N/cm]** | **KK Stahl nach Benzinlagerung [N/cm]** | **Klebkraftreduktion [%]** | **Benzinbeständigkeit** |
|---|---|---|---|---|
| **MT 6** | 50 f.s. | 44 | 12,0 | Sehr gut |
| **VMT 9** | 50 f.s. | 38 | 24,0 | Gut |
| **VMT 10** | 41 | 2 | 95,1 | Schlecht |
| **VMT 11** | 25 | 22 | 12,0 | Sehr gut |
| Messmethode H5, f.s.: foam split (kohäsives Spaltens des viskoelastischen Trägers) | | | | |

**Bevorzugte Ausführungsformen der Erfindung**

Im Folgenden werden besonders bevorzugte Ausführungsformen der Erfindung in Form von Ausführungsformen AF 1 bis AF 31 zusammengefasst:

AF 1. Mehrschichtiges Produkt, umfassend

- wenigstens eine Schicht eines Acrylat-basierten Schaumträgers (S); und
- eine auf diese Schicht aufgetragene, mehrphasige Polymerzusammensetzung (P);

wobei die mehrphasige Polymerzusammensetzung (P) umfasst:

◦ ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
◦ und wenigstens eine in der Kohlenwasserstoffphase Kw des Kammcopolymers (A) lösliche Kohlenwasserstoffkomponente (B) umfassend wenigstens ein Weichharz und wenigstens ein Festharz;

wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin, bevorzugt um 40 bis 60 Kelvin, noch bevorzugter um 45 bis 60 Kelvin höher als Tg(Ac) ist.

AF 2. Mehrschichtiges Produkt nach AF 1, wobei der Acrylat-basierte Schaumträger (S) ein viskoelastischer Schaumträger ist.

AF 3. Mehrschichtiges Produkt nach einer der vorhergehenden AF 1 bis AF 2, wobei das die Schicht des Schaumträgers (S) bildende Acrylat ein Polyacrylat ist, das erhältlich ist durch freie oder kontrollierte radikalische Polymerisation eines oder mehrerer Acrylate und Alkylacrylate.

AF 4. Mehrschichtiges Produkt nach einer der vorhergehenden AF 1 bis AF 3, wobei das die Schicht des Schaumträgers (S) bildende Acrylat ein vernetztes Polyacrylat, bevorzugt ein thermisch vernetztes Polyacrylat ist.

AF 5. Mehrschichtiges Produkt nach einer der vorhergehenden AF 1 bis AF 4, wobei das die Schicht des Schaumträgers (S) bildende Acrylat ein Polyacrylat ist, das erhältlich ist durch Polymerisation von Monomeren, bestehend aus Monomeren der folgenden Gruppen (a1) bis (a3):

(a1) 70 bis 100 Gew.-%, bezogen auf alle an der Polymerisation teilnehmenden Monomere, Acrylsäureester und/oder Methacrylsäureester und/oder einer freien Säure gemäß Strukturformel (I):

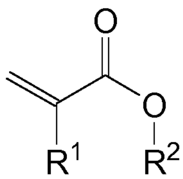

wobei $R^1$ H oder $CH_3$ ist; und $R^2$ H oder $C_1$-$C_{14}$-Alkyl darstellt;

(a2) 0 bis 30 Gew.-%, bezogen auf alle an der Polymerisation teilnehmenden Monomere, olefinisch ungesättigte Monomere, die mit den Monomeren der Gruppe (a1) copolymerisierbar sind und wenigstens eine funktionelle Gruppe aufweisen; und

(a3) optional weitere Acrylate und/oder Methacrylate und/oder olefinisch ungesättigte Monomere, bevorzugt in einem Anteil von 0 bis 5 Gew.-%, bezogen auf alle an der Polymerisation teilnehmenden Monomere, die mit den Monomeren der Gruppe (a1) copolymerisierbar sind und wenigstens eine funktionelle Gruppe aufweisen, die mittels eines Kupplungsreagenzes zu einer kovalenten Vernetzung führt.

AF 6. Mehrschichtiges Produkt nach AF 5, wobei die Monomere der Gruppe (a1) ausgewählt sind aus Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat, sowie Mischungen hiervon;

und/oder wobei die Monomere der Gruppe (a2) ausgewählt sind aus Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, sowie Mischungen hiervon;
und/oder wobei die Monomere der Gruppe (a3) ausgewählt sind aus Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dimethylacrylsäure, und 4-Vinylbenzoesäure, sowie Mischungen hiervon.

AF 7. Mehrschichtiges Produkt nach einer der vorhergehenden AF 1 bis AF 6, wobei das mehrschichtige Produkt ein Klebeband ist.

AF 8. Mehrschichtiges Produkt nach einer der AF 5 bis AF A7, wobei die Monomere der Gruppen (a1) bis (a3) derart gewählt sind, dass die statische Glasübergangstemperatur, Tg(A), gemessen nach der DSC-Methode, des die Schicht des Schaumträgers (S) bildenden Acrylats 15 °C oder weniger beträgt.

AF 9. Mehrschichtiges Produkt nach einer der vorhergehenden AF 1 bis AF 8, wobei die Schicht des Schaumträgers (S) zusätzlich zu dem diese Schicht bildenden Acrylat wenigstens ein klebrigmachendes Harz enthält.

AF 10. Mehrschichtiges Produkt nach einer der vorhergehenden AF 1 bis AF 9, wobei die Schicht des Schaumträgers (S) durch Verwendung von Mikroballons geschäumt ist.

AF 11. Mehrschichtiges Produkt nach einer der vorhergehenden AF 1 bis AF 10, wobei die Schicht des Schaumträgers (S) eine Schichtdicke von 0,3 bis 5 mm aufweist.

AF 12. Mehrschichtiges Produkt nach einer der vorhergehenden AF 1 bis AF 11, wobei die statische Glasübergangstemperatur der diskontinuierlichen Kohlenwasserstoffphase Kw1 innerhalb der Polymerzusammensetzung (P), Tg(Kw1), in einem Bereich von -5 bis +15 °C, bevorzugt 0 bis +10 °C liegt.

AF 13. Mehrschichtiges Produkt nach einer der vorhergehenden AF 1 bis AF 12, wobei die statische Glasübergangstemperatur der kontinuierlichen Acrylatphase innerhalb der Polymerzusammensetzung (P), Tg(Ac), unterhalb von -10 °C, bevorzugt in einem Bereich von -60 bis -20 °C, bevorzugter in einem Bereich von -50 bis -30 °C liegt.

AF 14. Mehrschichtiges Produkt nach einer der vorhergehenden AF 1 bis AF 13, wobei das Makromer ein zahlenmittleres Molekulargewicht Mn, gemessen nach der GPC Methode, von 1.000 bis 500.000 g/mol, bevorzugt von 2.000 bis 30.000 aufweist.

AF 15. Mehrschichtiges Produkt nach einer der vorhergehenden AF 1 bis AF 14, wobei der Anteil des Kammcopolymers (A) 30-64 Gewichtsprozent, bevorzugt 45-60 Gewichtsprozent, bezogen auf das Gesamtgewicht des Kammcopolymers (A) und der wenigstens einen Kohlenwasserstoffkomponente (B) innerhalb der Polymerzusammensetzung (P) ausmacht.

AF 16. Mehrschichtiges Produkt nach einer der vorhergehenden AF 1 bis AF 15, wobei die Makromereinheiten innerhalb des Kammcopolymers (A) 5-25 Gewichtsprozent, bevorzugt 10-15 Gewichtsprozent, bezogen auf das Gesamtgewicht des Kammcopolymers (A), ausmachen.

AF 17. Mehrschichtiges Produkt nach einer der vorhergehenden AF 1 bis AF 16, wobei das wenigstens eine (Meth-)Acrylatmonomer, das zur Herstellung des Kammcopolymers (A) verwendbar ist, wenigstens ein Monomer umfasst, das ausgewählt ist aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, bevorzugt aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat und Decylacrylat.

AF 18. Mehrschichtiges Produkt nach einer der vorhergehenden AF 1 bis AF 17, wobei die Polymerisation des wenigstens einen (Meth-)Acrylatmonomers, das zur Herstellung des Kammcopolymers (A) verwendbar ist, in Anwesenheit wenigstens eines weiteren copolymerisierbaren Monomers durchgeführt wird, wobei dieses wenigstens eine weitere copolymerisierbare Monomer ausgewählt ist aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

AF 19. Mehrschichtiges Produkt nach einer der vorhergehenden AF 1 bis AF 18, wobei das Kammcopolymer (A) erhältlich ist durch Polymerisation eines Comonomerengemisches umfassend Acrylsäure, Butylacrylat und 2-Ethylhexylacrylat in Gegenwart des wenigstens einen Makromers.

AF 20. Mehrschichtiges Produkt nach einer der vorhergehenden AF 1 bis AF 19, wobei die Polymerisation des wenigstens einen (Meth-)Acrylatmonomers, das zur Herstellung des Kammcopolymers (A) verwendbar ist, in Anwesenheit wenigstens eines weiteren nichtpolyolefinischen Makromers durchgeführt wird, wobei das weitere nichtpolyolefinische Makromer bevorzugt ausgewählt ist aus der Gruppe der Polymethacrylate, der Polystyrole, der Polydimethylsiloxane, der Polyethylenoxide und der Polypropylenoxide.

AF 21. Mehrschichtiges Produkt nach einer der vorhergehenden AF 1 bis AF 20, wobei das Weichharz und das Festharz der Kohlenwasserstoffkomponente (B) der Polymerzusammensetzung (P) ein zahlenmittleres Molekulargewicht Mn von 1.000 g/mol oder weniger, gemessen nach der GPC Methode, aufweisen.

AF 22. Mehrschichtiges Produkt nach einer der vorhergehenden AF 1 bis AF 21, wobei die Kohlenwasserstoffkomponente (B) der Polymerzusammensetzung (P) aus einem Weichharz und einem Festharz besteht.

AF 23. Mehrschichtiges Produkt nach einer der vorhergehenden AF 1 bis AF 22, wobei die Polymerzusammensetzung (P) zusätzlich eine weitere Kohlenwasserstoffverbindung (C) enthält, deren zahlenmittleres Molekulargewicht Mn, gemessen nach der GPC Methode mehr als 1.000 g/mol beträgt, und wobei die Polymerzusammensetzung bevorzugt eine statische Glasübergangstemperatur Tg(C) aufweist, die zwischen den Glasübergangstemperaturen der kontinuierlichen Acrylatphase, Tg(Ac), und der diskontinuierlichen Kohlenwasserstoffphase, Tg(Kw1), liegt.

AF 24. Mehrschichtiges Produkt nach einer der vorhergehenden AF 1 bis AF 23, wobei die Polymerzusammensetzung (P) zusätzlich wenigstens ein Additiv, ausgewählt aus der Gruppe bestehend aus Weichmachern, Ölen und in der Acrylatphase des Kammcopolymers löslichen Harzen, bevorzugt Kolophoniumestern und/oder Terpenphenolharzen, enthält.

AF 25. Mehrschichtiges Produkt nach einer der vorhergehenden AF 1 bis AF 24, wobei die Gesamtmenge der Kohlenwasserstoffkomponente (B) und, falls vorhanden, der Kohlenwasserstoffverbindung (C) der Polymerzusammensetzung (P) 80 Gewichtprozent oder mehr, bezogen auf den Gesamtanteil der diskontinuierlichen Kohlenwasserstoffphase innerhalb der Polymerzusammensetzung (P), beträgt.

AF 26. Mehrschichtiges Produkt nach einer der vorhergehenden AF 1 bis AF 25, wobei die Polymerzusammensetzung (P) eine Haftklebmasse ist.

AF 27. Mehrschichtiges Produkt nach einer der vorhergehenden AF 1 bis AF 26, wobei die auf die Schicht des Schaumträgers (S) aufgetragene mehrphasige Polymerzusammensetzung (P) in Form einer Schicht mit einem Flächengewicht von 40 bis 100g/$m^2$ aufgetragen ist.

AF 28. Verfahren zur Herstellung eines mehrschichtigen Produktes nach einer der vorhergehenden AF 1 bis AF 27, umfassend die Schritte:

(i) Bereitstellen einer Schicht eines Acrylat-basierten Schaumträgers (S) mit einer Oberseite und einer Unterseite; und
(ii) Aufbringen einer mehrphasigen Polymerzusammensetzung (P) auf die Oberseite und/oder die Unterseite des Schaumträgers (S),

wobei die mehrphasige Polymerzusammensetzung (P) umfasst:

o ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
o und wenigstens eine in der Kohlenwasserstoffphase Kw des Kammcopolymers (A) lösliche Kohlenwasserstoffkomponente (B) umfassend wenigstens ein Weichharz und wenigstens ein Festharz,

und wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin, bevorzugt um 40 bis 60 Kelvin, noch bevorzugter um 45 bis 60 Kelvin höher als Tg(Ac) ist.

AF 29. Verfahren nach AF 28, wobei Schritt (i) die folgenden Verfahrensschritte beinhaltet:

(a) Bereitstellen eines oder mehrerer Acrylate und Alkylacrylate, die mittels freier oder kontrollierter radikalischer Polymerisation polymerisierbar sind;
(b) Polymerisieren der in Verfahrensschritt (a) bereitgestellten Acrylate und Alkylacrylate unter Bildung eines Polyacrylates;
(c) Das Überführen des erhaltenen Polyacrylates in einen Polyacrylat-Schaum; und
(d) Formen des Polyacrylat-Schaums zu einer Schicht eines Schaumträgers (S).

AF 30. Klebeband, umfassend ein mehrschichtiges Produkt nach einer der AF 1 bis AF 27.

AF 31. Verwendung des mehrschichtigen Produktes nach einer der AF 1 bis AF 27 zur Verklebung von Gegenständen.

## Patentansprüche

**1.** Mehrschichtiges Produkt, umfassend

- wenigstens eine Schicht eines Acrylat-basierten Schaumträgers (S); und
- eine auf diese Schicht aufgetragene, mehrphasige Polymerzusammensetzung (P);

wobei die mehrphasige Polymerzusammensetzung (P) umfasst:

o ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
o und wenigstens eine in der Kohlenwasserstoffphase Kw des Kammcopolymers (A) lösliche Kohlenwasserstoffkomponente (B) umfassend wenigstens ein Weichharz und wenigstens ein Festharz;

wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw 1) um 35 bis 60 Kelvin höher als Tg(Ac) ist.

**2.** Mehrschichtiges Produkt nach Anspruch 1, wobei der Acrylat-basierte Schaumträger (S) ein viskoelastischer Schaumträger ist.

**3.** Mehrschichtiges Produkt nach einem der vorhergehenden Ansprüche, wobei das die Schicht des Schaumträgers (S) bildende Acrylat ein Polyacrylat ist, das erhältlich ist durch freie oder kontrollierte radikalische Polymerisation eines oder mehrerer Acrylate und Alkylacrylate.

**4.** Mehrschichtiges Produkt nach einem der vorhergehenden Ansprüche, wobei das die Schicht des Schaumträgers (S) bildende Acrylat ein vernetztes Polyacrylat, bevorzugt ein thermisch vernetztes Polyacrylat, ist.

**5.** Mehrschichtiges Produkt nach einem der vorhergehenden Ansprüche, wobei das die Schicht des Schaumträgers (S) bildende Acrylat ein Polyacrylat ist, das erhältlich ist durch Polymerisation von Monomeren, bestehend aus Monomeren der folgenden Gruppen (a1) bis (a3):

(a1) 70 bis 100 Gew.-% Acrylsäureester und/oder Methacrylsäureester und/oder einer freien Säure gemäß Strukturformel (I):

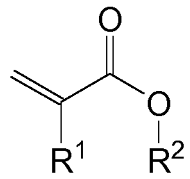

wobei $R^1$ H oder $CH_3$ ist; und $R^2$ H oder $C_1$-$C_{14}$-Alkyl darstellt;
(a2) 0 bis 30 Gew.-% olefinisch ungesättigte Monomere, die mit den Monomeren der Gruppe (a1) copolymerisierbar sind und wenigstens eine funktionelle Gruppe aufweisen; und
(a3) optional weitere Acrylate und/oder Methacrylate und/oder olefinisch ungesättigte Monomere, bevorzugt in einem Anteil von 0 bis 5 Gew.-%, die mit den Monomeren der Gruppe (a1) copolymerisierbar sind und wenigstens eine funktionelle Gruppe aufweisen, die mittels eines Kupplungsreagenzes zu einer kovalenten Vernetzung führt.

6. Mehrschichtiges Produkt nach Anspruch 5, wobei die Monomere der Gruppe (a1) ausgewählt sind aus Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigten Isomeren wie zum Beispiel 2-Ethylhexylacrylat, sowie Mischungen hiervon;
und/oder wobei die Monomere der Gruppe (a2) ausgewählt sind aus Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, sowie Mischungen hiervon;
und/oder wobei die Monomere der Gruppe (a3) ausgewählt sind aus Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N*-*tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, $\beta$-Acryloyloxypropionsäure, Trichloracrylsäure, Fumarsäure, Crotonsäure, Aconitsäure, Dimethylacrylsäure, und 4-Vinylbenzoesäure, sowie Mischungen hiervon.

7. Mehrschichtiges Produkt nach einem der vorhergehenden Ansprüche, wobei das mehrschichtige Produkt ein Klebeband ist; und/oder wobei die Schicht des Schaumträgers (S) durch Verwendung von Mikroballons geschäumt ist.

8. Mehrschichtiges Produkt nach einem der vorhergehenden Ansprüche, wobei die statische Glasübergangstemperatur der diskontinuierlichen Kohlenwasserstoffphase innerhalb der Polymerzusammensetzung (P), Tg(Kw1), in einem Bereich von -5 bis +15 °C, bevorzugt 0 bis +10 °C liegt; und/oder wobei die statische Glasübergangstemperatur der kontinuierlichen Acrylatphase innerhalb der Polymerzusammensetzung (P), Tg(Ac), unterhalb von -10 °C, bevorzugt in einem Bereich von -60 bis -20 °C, bevorzugter in einem Bereich von -50 bis -30 °C liegt.

9. Mehrschichtiges Produkt nach einem der vorhergehenden Ansprüche, wobei der Anteil des Kammcopolymers (A) 30-64 Gewichtsprozent, bevorzugt 45-60 Gewichtsprozent, bezogen auf das Gesamtgewicht des Kammcopolymers (A) und der wenigstens einen Kohlenwasserstoffkomponente (B) innerhalb der Polymerzusammensetzung (P) ausmacht; und/oder wobei die Makromereinheiten innerhalb des Kammcopolymers (A) 5-25 Gewichtsprozent, bevorzugt 10-15 Gewichtsprozent, bezogen auf das Gesamtgewicht des Kammcopolymers (A), ausmachen.

10. Mehrschichtiges Produkt nach einem der vorhergehenden Ansprüche, wobei das wenigstens eine (Meth-)Acrylatmonomer, das zur Herstellung des Kammcopolymers (A) verwendbar ist, wenigstens ein Monomer umfasst, das ausgewählt ist aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, bevorzugt aus der Gruppe bestehend aus Acrylsäure, Methacrylsäure, 2-Ethylhexylacrylat, Methylacrylat, Butylacrylat, Isobornylacrylat, Stearylacrylat, Isostearylacrylat, Amylacrylat, Isooctylacrylat und Decylacrylat.

11. Mehrschichtiges Produkt nach einem der vorhergehenden Ansprüche, wobei die Polymerisation des wenigstens

einen (Meth-)Acrylatmonomers, das zur Herstellung des Kammcopolymers (A) verwendbar ist, in Anwesenheit wenigstens eines weiteren copolymerisierbaren Monomers durchgeführt wird, wobei dieses wenigstens eine weitere copolymerisierbare Monomer ausgewählt ist aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

**12.** Mehrschichtiges Produkt nach einem der vorhergehenden Ansprüche, wobei das Weichharz und das Festharz der Kohlenwasserstoffkomponente (B) jeweils ein zahlenmittleres Molekulargewicht Mn von 1.000 g/mol oder weniger, gemessen nach der GPC Methode, aufweisen.

**13.** Mehrschichtiges Produkt nach Anspruch 12, wobei die Polymerzusammensetzung (P) zusätzlich eine weitere Kohlenwasserstoffverbindung (C) enthält, deren zahlenmittleres Molekulargewicht Mn, gemessen nach der GPC Methode, mehr als 1.000 g/mol beträgt, und wobei die Polymerzusammensetzung bevorzugt eine statische Glasübergangstemperatur Tg(C) aufweist, die zwischen den Glasübergangstemperaturen der kontinuierlichen Acrylatphase, Tg(Ac), und der diskontinuierlichen Kohlenwasserstoffphase, Tg(Kw1), liegt.

**14.** Mehrschichtiges Produkt nach einem der vorhergehenden Ansprüche, wobei die Polymerzusammensetzung (P) eine Haftklebmasse ist; und/oder wobei die auf die Schicht des Schaumträgers (S) aufgetragene mehrphasige Polymerzusammensetzung (P) in Form einer Schicht mit einem Flächengewicht von 40 bis 100g/$m^2$ aufgetragen ist.

**15.** Verfahren zur Herstellung eines mehrschichtigen Produktes nach einem der vorhergehenden Ansprüche, umfassend die Schritte:

(i) Bereitstellen einer Schicht eines Acrylat-basierten Schaumträgers (S) mit einer Oberseite und einer Unterseite; und
(ii) Aufbringen einer mehrphasigen Polymerzusammensetzung (P) auf die Oberseite und/oder die Unterseite des Schaumträgers (S),

wobei die mehrphasige Polymerzusammensetzung (P) umfasst:

o ein Kammcopolymer (A), das erhältlich ist durch Polymerisation wenigstens eines (Meth-)Acrylatmonomers in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
o und wenigstens eine in der Kohlenwasserstoffphase Kw des Kammcopolymers (A) lösliche Kohlenwasserstoffkomponente (B) umfassend ein Weichharz und ein Festharz,

und wobei die mehrphasige Polymerzusammensetzung (P) eine kontinuierliche Acrylatphase mit einer statischen Glasübergangstemperatur Tg(Ac), gemessen nach der DSC Methode, und eine die Kohlenwasserstoffkomponente (B) enthaltende, diskontinuierliche Kohlenwasserstoffphase Kw1 mit einer statischen Glasübergangstemperatur Tg(Kw1), gemessen nach der DSC Methode, aufweist, und wobei Tg(Kw1) um 35 bis 60 Kelvin höher als Tg(Ac) ist.

**16.** Klebeband, umfassend ein mehrschichtiges Produkt nach einem der Ansprüche 1 bis 14.

**17.** Verwendung des mehrschichtigen Produktes nach einem der Ansprüche 1 bis 14 zur Verklebung von Gegenständen.

**Claims**

**1.** Multilayer product comprising

- at least one layer of an acrylate-based foam carrier (S); and
- a multiphase polymer composition (P) applied to this layer;

the multiphase polymer composition (P) comprising:

o a comb copolymer (A) which is obtainable by polymerization of at least one (meth)acrylate monomer in the presence of at least one macromer selected from the group consisting of polymerizable ethylene-butylene,

ethylene-propylene, ethylene-butylene-propylene and isobutylene macromers, and which forms a continuous acrylate phase and a discontinuous hydrocarbon phase Kw;

o and at least one hydrocarbon component (B) which is soluble in the hydrocarbon phase Kw of the comb copolymer (A) and comprises at least one plasticizer resin and at least one solid resin;

the multiphase polymer composition (P) having a continuous acrylate phase with a static glass transition temperature Tg(Ac), measured by the DSC method, and a discontinuous hydrocarbon phase Kw1, comprising the hydrocarbon component (B) and having a static glass transition temperature Tg(Kw1), measured by the DSC method, where Tg(Kw1) is higher than Tg(Ac) by 35 to 60 kelvins.

**2.** Multilayer product according to Claim 1, the acrylate-based foam carrier (S) being a viscoelastic foam carrier.

**3.** Multilayer product according to either of the preceding claims, the acrylate forming the layer of the foam carrier (S) being a polyacrylate which is obtainable by free or controlled radical polymerization of one or more acrylates and alkyl acrylates.

**4.** Multilayer product according to any of the preceding claims, the acrylate forming the layer of the foam carrier (S) being a crosslinked polyacrylate, preferably a thermally crosslinked polyacrylate.

**5.** Multilayer product according to any of the preceding claims, the acrylate forming the layer of the foam carrier (S) being a polyacrylate which is obtainable by polymerization of monomers consisting of monomers of the following groups (a1) to (a3):

(a1) 70 to 100 wt% of acrylic esters and/or methacrylic esters and/or a free acid as per structural formula (I):

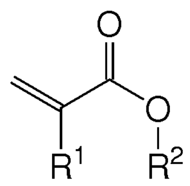

where $R^1$ is H or $CH_3$ and $R^2$ represents H or $C_1$-$C_{14}$ alkyl;

(a2) 0 to 30 wt% of olefinically unsaturated monomers which are copolymerizable with the monomers of group (a1) and have at least one functional group; and

(a3) optionally further acrylates and/or methacrylates and/or olefinically unsaturated monomers, preferably in a fraction of 0 to 5 wt%, which are copolymerizable with the monomers of group (a1) and have at least one functional group which leads by means of a coupling reagent to covalent crosslinking.

**6.** Multilayer product according to Claim 5, the monomers of group (a1) being selected from methyl acrylate, methyl methacrylate, ethyl acrylate, ethyl methacrylate, propyl acrylate, propyl methacrylate, n-butyl acrylate, n-butyl methacrylate, n-pentyl acrylate, n-hexyl acrylate, n-hexyl methacrylate, n-heptyl acrylate, n-octyl acrylate, n-nonyl acrylate, lauryl acrylate, stearyl acrylate, stearyl methacrylate, behenyl acrylate and their branched isomers such as, for example, 2-ethylhexyl acrylate, and also mixtures thereof;
and/or the monomers of group (a2) being selected from maleic anhydride, itaconic anhydride, glycidyl methacrylate, benzyl acrylate, benzyl methacrylate, phenyl acrylate, phenyl methacrylate, tert-butylphenyl acrylate, tert-butylphenyl methacrylate, phenoxyethyl acrylate, phenoxyethyl methacrylate, 2-butoxyethyl methacrylate, 2-butoxyethyl acrylate, dimethylaminoethyl methacrylate, dimethylaminoethyl acrylate, diethylaminoethyl methacrylate, diethylaminoethyl acrylate and tetrahydrofurfuryl acrylate, and also mixtures thereof;
and/or the monomers of group (a3) being selected from hydroxyethyl acrylate, 3-hydroxypropyl acrylate, hydroxyethyl methacrylate, 3-hydroxypropyl methacrylate, 4-hydroxybutyl acrylate, 4-hydroxybutyl methacrylate, allyl alcohol, itaconic acid, acrylamide and cyanoethyl methacrylate, cyanoethyl acrylate, 6-hydroxyhexyl methacrylate, *N-tert*-butylacrylamide, *N*-methylolmethacrylamide, *N*-(butoxymethyl)methacrylamide, *N*-methylolacrylamide, *N*-(ethoxymethyl)acrylamide, *N*-isopropylacrylamide, vinylacetic acid, β-acryloyloxypropionic acid, trichloroacrylic acid, fumaric acid, crotonic acid, aconitic acid, dimethylacrylic acid and 4-vinylbenzoic acid, and also mixtures thereof.

**7.** Multilayer product according to any of the preceding claims, the multilayer product being an adhesive tape; and/or the layer of the foam carrier (S) being foamed through use of microballoons.

8. Multilayer product according to any of the preceding claims, the static glass transition temperature of the discontinuous hydrocarbon phase within the polymer composition (P), Tg(Kw1), being in a range from -5 to +15°C, preferably 0 to +10°C; and/or the static glass transition temperature of the continuous acrylate phase within the polymer composition (P), Tg(Ac), being below -10°C, preferably in a range from -60 to -20°C, more preferably in a range from -50 to - 30°C.

9. Multilayer product according to any of the preceding claims, the fraction of the comb copolymer (A) making up 30-64 weight percent, preferably 45-60 weight percent, based on the total weight of the comb copolymer (A) and of the at least one hydrocarbon component (B) within the polymer composition (P); and/or the macromer units within the comb copolymer (A) making up 5-25 weight percent, preferably 10-15 weight percent, based on the total weight of the comb copolymer (A).

10. Multilayer product according to any of the preceding claims, the at least one (meth)acrylate monomer which can be used for preparing the comb copolymer (A) comprising at least one monomer which is selected from the group consisting of acrylic acid, methacrylic acid, 2-ethylhexyl acrylate, methyl acrylate, butyl acrylate, isobornyl acrylate, stearyl acrylate, isostearyl acrylate, amyl acrylate, isooctyl acrylate, decyl acrylate, hydroxyethyl acrylate, hydroxyethyl methacrylate and 4-hydroxybutyl acrylate, preferably from the group consisting of acrylic acid, methacrylic acid, 2-ethylhexyl acrylate, methyl acrylate, butyl acrylate, isobornyl acrylate, stearyl acrylate, isostearyl acrylate, amyl acrylate, isooctyl acrylate and decyl acrylate.

11. Multilayer product according to any of the preceding claims, the polymerization of the at least one (meth)acrylate monomer which can be used for preparing the comb copolymer (A) being carried out in the presence of at least one further copolymerizable monomer, this at least one further copolymerizable monomer being selected from the group consisting of itaconic acid, itaconic anhydride, maleic acid, maleic anhydride, vinyl acetate, vinyl butyrate, vinyl propionate, vinyl isobutyrate, vinyl valerate, vinyl versatates, N-vinylpyrrolidone and N-vinylcaprolactam.

12. Multilayer product according to any of the preceding claims, the plasticizer resin and the solid resin of the hydrocarbon component (B) having a number-average molecular weight Mn of 1000 g/mol or less, measured by the GPC method.

13. Multilayer product according to Claim 12, the polymer composition (P) further comprising a further hydrocarbon compound (C), whose number-average molecular weight Mn, measured by the GPC method, is more than 1000 g/mol, and the polymer composition preferably having a static glass transition temperature Tg(C) which lies between the glass transition temperatures of the continuous acrylate phase, Tg(Ac), and of the discontinuous hydrocarbon phase, Tg(Kw1).

14. Multilayer product according to any of the preceding claims, the polymer composition (P) being a pressure-sensitive adhesive; and/or the multiphase polymer composition (P) applied to the layer of the foam carrier (S) being applied in the form of a layer having a weight per unit area of 40 to 100 g/m$^2$.

15. Method for producing a multilayer product according to any of the preceding claims, comprising the steps of:

(i) providing a layer of an acrylate-based foam carrier (S) having a top side and a bottom side; and
(ii) applying a multiphase polymer composition (P) to the top side and/or bottom side of the foam carrier (S),

the multiphase polymer composition (P) comprising:

o a comb copolymer (A) which is obtainable by polymerization of at least one (meth)acrylate monomer in the presence of at least one macromer selected from the group consisting of polymerizable ethylene-butylene, ethylene-propylene, ethylene-butylene-propylene and isobutylene macromers, and which forms a continuous acrylate phase and a discontinuous hydrocarbon phase Kw;
o and at least one hydrocarbon component (B) which is soluble in the hydrocarbon phase Kw of the comb copolymer (A) and comprises a plasticizer resin and a solid resin;

the multiphase polymer composition (P) having a continuous acrylate phase with a static glass transition temperature Tg(Ac), measured by the DSC method, and a discontinuous hydrocarbon phase Kw1, comprising the hydrocarbon component (B) and having a static glass transition temperature Tg(Kw1), measured by the DSC method, where Tg(Kw1) is higher than Tg(Ac) by 35 to 60 kelvins.

16. Adhesive tape comprising a multilayer product according to any of Claims 1 to 14.

17. Use of the multilayer product according to any of Claims 1 to 14 for adhesive bonding of articles.

**Revendications**

1. Produit multicouche, comprenant :

   - au moins une couche d'un support en mousse à base d'acrylate (S) ; et
   - une composition polymère polyphasée (P) appliquée sur cette couche ;

   la composition polymère polyphasée (P) comprenant :

   - un copolymère en peigne (A), qui peut être obtenu par polymérisation d'au moins un monomère de (méth)acrylate en présence d'au moins un macromère, choisi dans le groupe constitué par les macromères polymérisables d'éthylène-butylène, d'éthylène-propylène, d'éthylène-butylène-propylène et d'isobutylène, et qui forme une phase acrylate continue et une phase hydrocarbonée discontinue Kw ;
   - et au moins un composant hydrocarboné (B) soluble dans la phase hydrocarbonée Kw du copolymère en peigne (A), comprenant au moins une résine molle et au moins une résine solide ;

   la composition polymère polyphasée (P) comprenant une phase acrylate continue ayant une température de transition vitreuse statique Tg(Ac), mesurée selon la méthode DSC, et une phase hydrocarbonée discontinue Kw1, contenant le composant hydrocarboné (B), ayant une température de transition vitreuse statique Tg(Kw1), mesurée selon la méthode DSC, Tg(Kw1) étant supérieure de 35 à 60 Kelvins à Tg(Ac).

2. Produit multicouche selon la revendication 1, dans lequel le support en mousse à base d'acrylate (S) est un support en mousse viscoélastique.

3. Produit multicouche selon l'une quelconque des revendications précédentes, dans lequel l'acrylate formant la couche du support en mousse (S) est un polyacrylate, qui peut être obtenu par polymérisation radicalaire libre ou contrôlée d'un ou de plusieurs acrylates et acrylates d'alkyle.

4. Produit multicouche selon l'une quelconque des revendications précédentes, dans lequel l'acrylate formant la couche du support en mousse (S) est un polyacrylate réticulé, de préférence un polyacrylate réticulé thermiquement.

5. Produit multicouche selon l'une quelconque des revendications précédentes, dans lequel l'acrylate formant la couche du support en mousse (S) est un polyacrylate, qui peut être obtenu par polymérisation de monomères, constitués par des monomères des groupes (a1) à (a3) suivants :

   (a1) 70 à 100 % en poids d'esters de l'acide acrylique et/ou d'esters de l'acide méthacrylique et/ou d'un acide libre selon la formule structurale (I) :

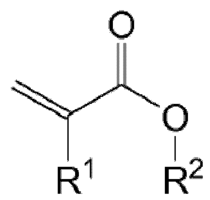

   dans laquelle $R^1$ représente H ou $CH_3$ ; et $R^2$ représente H ou alkyle en $C_1$-$C_{14}$ ;
   (a2) 0 à 30 % en poids de monomères oléfiniquement insaturés, qui sont copolymérisables avec les monomères du groupe (a1) et comprennent au moins un groupe fonctionnel ; et
   (a3) éventuellement d'autres acrylates et/ou méthacrylates et/ou monomères oléfiniquement insaturés, de préférence en une proportion de 0 à 5 % en poids, qui sont copolymérisables avec les monomères du groupe (a1) et comprennent au moins un groupe fonctionnel qui conduit à une réticulation covalente au moyen d'un réactif de couplage.

6. Produit multicouche selon la revendication 5, dans lequel les monomères du groupe (a1) sont choisis parmi l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de n-pentyle, l'acrylate de n-hexyle, le méthacrylate de n-hexyle, l'acrylate de n-heptyle, l'acrylate de n-octyle, l'acrylate de n-nonyle, l'acrylate de lauryle, l'acrylate de stéaryle, le méthacrylate de stéaryle, l'acrylate de béhényle, et leurs isomères ramifiés tels que par exemple l'acrylate de 2-éthylhexyle, ainsi que leurs mélanges ;
et/ou dans lequel les monomères du groupe (a2) sont choisis parmi l'anhydride de l'acide maléique, l'anhydride de l'acide itaconique, le méthacrylate de glycidyle, l'acrylate de benzyle, le méthacrylate de benzyle, l'acrylate de phényle, le méthacrylate de phényle, l'acrylate de tert-butylphényle, le méthacrylate de tert-butylphényle, l'acrylate de phénoxyéthyle, le méthacrylate de phénoxyéthyle, le méthacrylate de 2-butoxyéthyle, l'acrylate de 2-butoxyéthyle, le méthacrylate de diméthylaminoéthyle, l'acrylate de diméthylaminoéthyle, le méthacrylate de diéthylaminoéthyle, l'acrylate de diéthylaminoéthyle et l'acrylate de tétrahydrofurfuryle, ainsi que leurs mélanges ;
et/ou dans lequel les monomères du groupe (a3) sont choisis parmi l'acrylate d'hydroxyéthyle, l'acrylate de 3-hydroxypropyle, le méthacrylate d'hydroxyéthyle, le méthacrylate de 3-hydroxypropyle, l'acrylate de 4-hydroxybutyle, le méthacrylate de 4-hydroxybutyle, l'alcool allylique, l'acide itaconique, l'acrylamide et le méthacrylate de cyanoéthyle, l'acrylate de cyanoéthyle, le méthacrylate de 6-hydroxyhexyle, le *N*-tert-butylacrylamide, le N-méthylolméthacrylamide, le *N*-(butoxyméthyl)méthacrylamide, le N-méthylolacrylamide, le N-(éthoxyméthyl)acrylamide, le N-isopropylacrylamide, l'acide vinylacétique, l'acide β-acryloyloxypropionique, l'acide trichloroacrylique, l'acide fumarique, l'acide crotonique, l'acide aconitique, l'acide diméthylacrylique et l'acide 4-vinylbenzoïque, ainsi que leurs mélanges.

7. Produit multicouche selon l'une quelconque des revendications précédentes, dans lequel le produit multicouche est une bande adhésive ; et/ou dans lequel la couche du support en mousse (S) est moussée en utilisant des microballons.

8. Produit multicouche selon l'une quelconque des revendications précédentes, dans lequel la température de transition vitreuse statique de la phase hydrocarbonée discontinue dans la composition polymère (P), Tg(Kw1), se situe dans une plage allant de -5 à +15 °C, de préférence de 0 à +10 °C ; et/ou dans lequel la température de transition vitreuse statique de la phase acrylate continue dans la composition polymère (P), Tg(Ac), est inférieure à -10 °C, de préférence dans une plage allant de -60 à -20 °C, de préférence dans une plage allant de -50 à -30 °C.

9. Produit multicouche selon l'une quelconque des revendications précédentes, dans lequel la proportion du copolymère en peigne (A) est de 30 à 64 pour cent en poids, de préférence de 45 à 60 pour cent en poids, par rapport au poids total du copolymère en peigne (A) et dudit au moins un composant hydrocarboné (B) dans la composition polymère (P) ; et/ou dans lequel les unités macromères dans le copolymère en peigne (A) constituent 5 à 25 pour cent en poids, de préférence 10 à 15 pour cent en poids, par rapport au poids total du copolymère en peigne (A).

10. Produit multicouche selon l'une quelconque des revendications précédentes, dans lequel ledit au moins un monomère de (méth)acrylate qui peut être utilisé pour la fabrication du copolymère en peigne (A) comprend au moins un monomère qui est choisi dans le groupe constitué par l'acide acrylique, l'acide méthacrylique, l'acrylate de 2-éthylhexyle, l'acrylate de méthyle, l'acrylate de butyle, l'acrylate d'isobornyle, l'acrylate de stéaryle, l'acrylate d'isostéaryle, l'acrylate d'amyle, l'acrylate d'isooctyle, l'acrylate de décyle, l'acrylate d'hydroxyéthyle, le méthacrylate d'hydroxyéthyle et l'acrylate de 4-hydroxybutyle, de préférence dans le groupe constitué par l'acide acrylique, l'acide méthacrylique, l'acrylate de 2-éthylhexyle, l'acrylate de méthyle, l'acrylate de butyle, l'acrylate d'isobornyle, l'acrylate de stéaryle, l'acrylate d'isostéaryle, l'acrylate d'amyle, l'acrylate d'isooctyle et l'acrylate de décyle.

11. Produit multicouche selon l'une quelconque des revendications précédentes, dans lequel la polymérisation dudit au moins un monomère de (méth)acrylate qui peut être utilisé pour la fabrication du copolymère en peigne (A) est réalisée en présence d'au moins un autre monomère copolymérisable, ledit au moins un autre monomère copolymérisable étant choisi dans le groupe constitué par l'acide itaconique, l'anhydride de l'acide itaconique, l'acide maléique, l'anhydride de l'acide maléique, l'acétate de vinyle, le butyrate de vinyle, le propionate de vinyle, l'isobutyrate de vinyle, le valérate de vinyle, le versatate de vinyle, la N-vinylpyrrolidone et le N-vinylcaprolactame.

12. Produit multicouche selon l'une quelconque des revendications précédentes, dans lequel la résine molle et la résine solide du composant hydrocarboné (B) présentent chacune un poids moléculaire moyen en nombre Mn de 1 000 g/mol ou moins, mesuré selon la méthode GPC.

13. Produit multicouche selon la revendication 12, dans lequel la composition polymère (P) contient en outre un composé

hydrocarboné supplémentaire (C), dont le poids moléculaire moyen en nombre Mn, mesuré selon la méthode GPC, est supérieur à 1 000 g/mol, et dans lequel la composition polymère présente de préférence une température de transition vitreuse statique Tg(C) qui se situe entre les températures de transition vitreuse de la phase acrylate continue, Tg(Ac), et de la phase hydrocarbonée discontinue, Tg(Kw1).

**14.** Produit multicouche selon l'une quelconque des revendications précédentes, dans lequel la composition polymère (P) est une masse adhésive de contact ; et/ou dans lequel la composition polymère polyphasée (P) appliquée sur la couche du support en mousse (S) est appliquée sous la forme d'une couche ayant un poids superficiel de 40 à 100 g/$m^2$.

**15.** Procédé de fabrication d'un produit multicouche selon l'une quelconque des revendications précédentes, comprenant les étapes suivantes :

(i) la préparation d'une couche d'un support en mousse à base d'acrylate (S) ayant un côté supérieur et un côté inférieur ; et
(ii) l'application d'une composition polymère polyphasée (P) sur le côté supérieur et/ou le côté inférieur du support en mousse (S),

la composition polymère polyphasée (P) comprenant :

- un copolymère en peigne (A), qui peut être obtenu par polymérisation d'au moins un monomère de (méth)acrylate en présence d'au moins un macromère, choisi dans le groupe constitué par les macromères polymérisables d'éthylène-butylène, d'éthylène-propylène, d'éthylène-butylène-propylène et d'isobutylène, et qui forme une phase acrylate continue et une phase hydrocarbonée discontinue Kw ;
- et au moins un composant hydrocarboné (B) soluble dans la phase hydrocarbonée Kw du copolymère en peigne (A), comprenant une résine molle et une résine solide ;

la composition polymère polyphasée (P) comprenant une phase acrylate continue ayant une température de transition vitreuse statique Tg(Ac), mesurée selon la méthode DSC, et une phase hydrocarbonée discontinue Kw1, contenant le composant hydrocarboné (B), ayant une température de transition vitreuse statique Tg(Kw1), mesurée selon la méthode DSC, Tg(Kw1) étant supérieur de 35 à 60 Kelvins à Tg(Ac).

**16.** Bande adhésive, comprenant un produit multicouche selon l'une quelconque des revendications 1 à 14.

**17.** Utilisation du produit multicouche selon l'une quelconque des revendications 1 à 14 pour le collage d'articles.

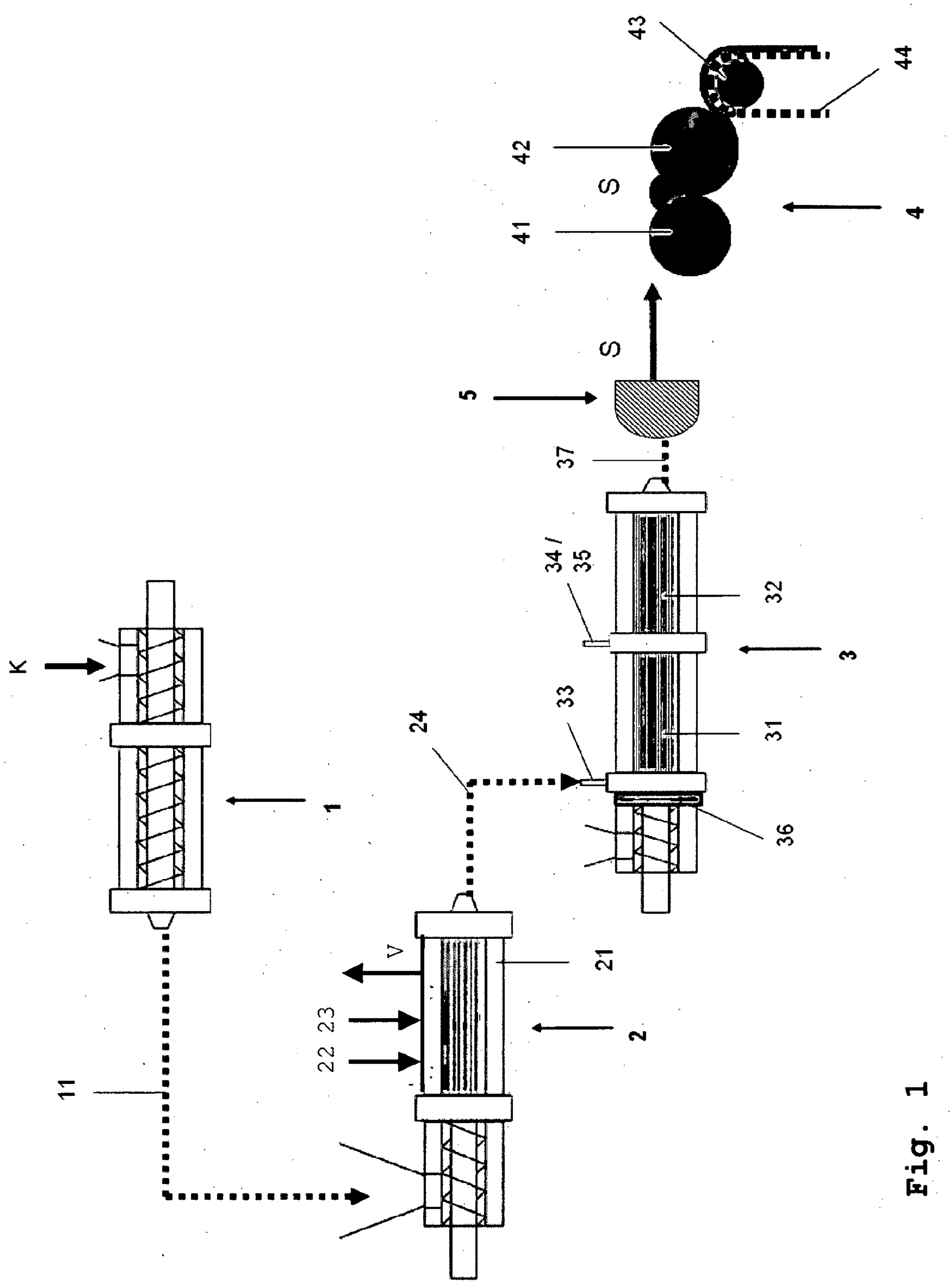


Fig. 1

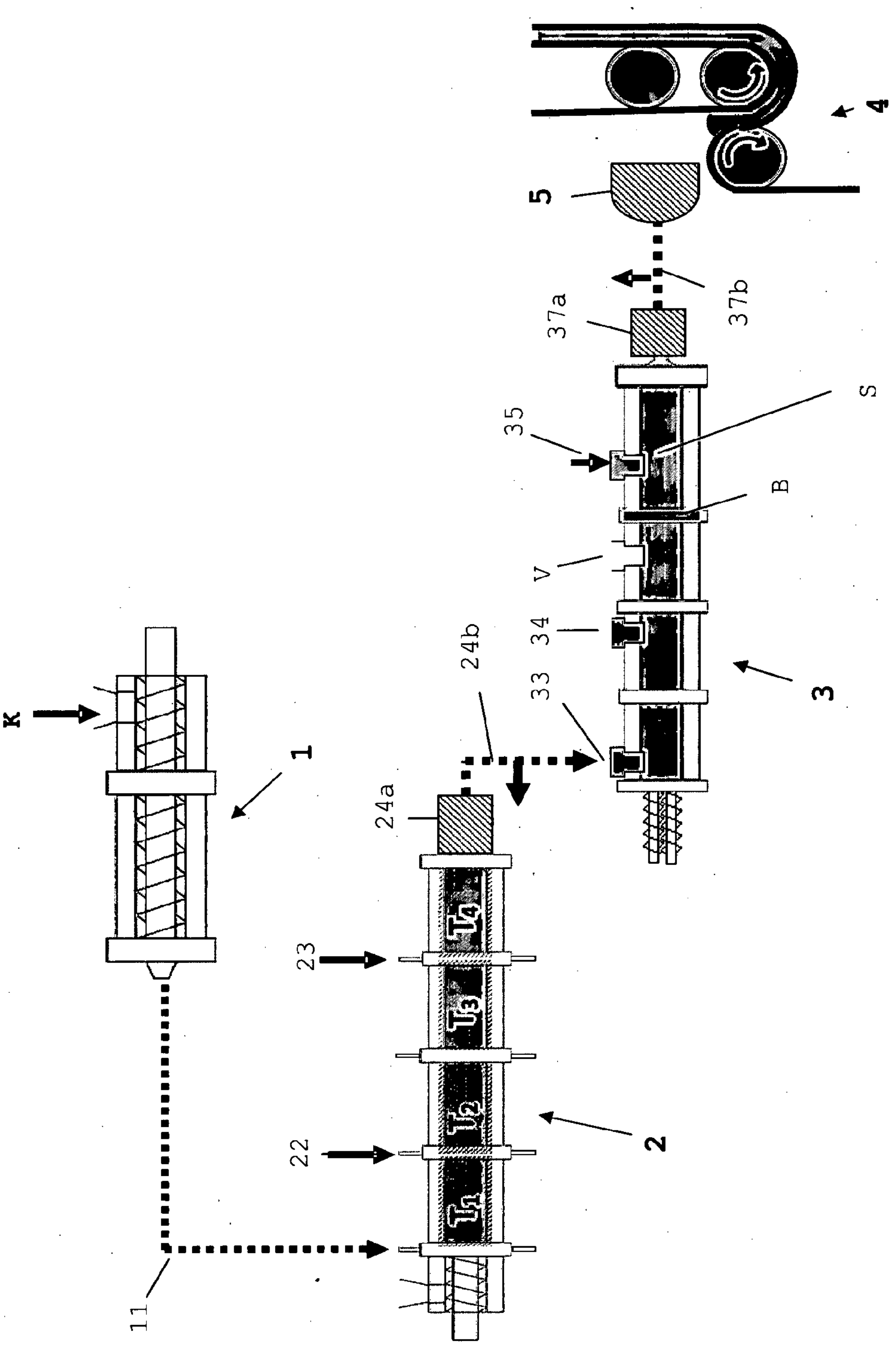


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2226369 A1
- WO 9624620 A1
- WO 9844008 A1
- DE 19949352 A1
- US 5945491 A
- US 5854364 A
- US 5789487 A
- WO 9801478 A1
- WO 9931144 A1
- EP 0752435 A1
- EP 1978069 A1
- WO 2010112346 A1


### In der Beschreibung aufgeführte Nicht-Patentliteratur


- **J. BRANDRUP ; E.H. IMMERGUT ; E.A. GRULKE.** Polymer Handbook. 1998
- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- **HOUBEN-WEYL.** *Methoden der Organischen Chemie,* vol. E 19a, 60-147
- *Macromolecules,* 2000, vol. 33, 243-245
- *Polymer,* 1967, vol. 8, 381